(19) **Europäisches Patentamt / European Patent Office / Office européen des brevets**

(11) **EP 4 523 993 A1**

(12) # EUROPEAN PATENT APPLICATION

(43) Date of publication:
**19.03.2025  Bulletin 2025/12**

(51) International Patent Classification (IPC):
**B61L 27/18** (2022.01)     **G06Q 10/0631** (2023.01)

(21) Application number: **24176758.1**

(52) Cooperative Patent Classification (CPC):
**B61L 27/18; G06Q 10/06311**

(22) Date of filing: **17.05.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023  JP 2023150563**
**09.02.2024  JP 2024018934**

(71) Applicants:
• **Kabushiki Kaisha Toshiba**
  **Minato-ku**
  **Tokyo (JP)**

• **Toshiba Infrastructure Systems & Solutions Corporation**
  **Kawasaki-shi, Kanagawa (JP)**

(72) Inventors:
• **OTSUKI, Tomoshi**
  **Tokyo (JP)**
• **OGAWA, Shinichiro**
  **Kawasaki (JP)**
• **IYAMA, Hitoshi**
  **Kawasaki (JP)**
• **KUBO, Hideki**
  **Kawasaki (JP)**

(74) Representative: **Marks & Clerk LLP**
**15 Fetter Lane**
**London EC4A 1BW (GB)**

(54) **INFORMATION PROCESSING DEVICE, INFORMATION PROCESSING METHOD, AND COMPUTER PROGRAM**

(57)     An information processing device comprises a processor to: acquire pieces of train line information and departure and arrival times at each stop position of a train; split the train line information based on replacement stop positions at which a task for working on the train can switch between staffs, to obtain a plurality of pieces of task fragment information each indicating a task of a staff corresponding to each split train line part; and allocate the pieces of task fragment information to target durations to create work schedules indicating a schedule of tasks for each of the target durations, wherein a series of the tasks continuously allocated in each work schedule corresponds to a basic work schedule, each work schedule includes one or more basic work schedule and the processor performs allocation of the pieces of task fragment information based on a constraint related to the basic work schedule.

FIG. 1

EP 4 523 993 A1

**Description**

<u>FIELD</u>

Approaches described herein relates to an information processing device, an information processing method, and a computer program.

<u>BACKGROUND</u>

In work schedule planning of creating a work schedule that indicates moving of a staff on one day, it is desired to consider conditions such as balanced timings of rest, the number of times of rest, an appropriate task continuation time, and fairness. Examples of methods of creating a work schedule plan including work schedules of staffs include a method of creating a work schedule plan by generating an initial provisional solution of the work schedule plan and updating the provisional solution in accordance with allocation rules and a method of using a task ratio, a labor ratio, a free-ride ratio, a task time, a rest time, a continuous task time, and the like as evaluation indicators. Efficiency related to the whole of a plurality of work schedules can be increased by using these methods, but fairness among the individual work schedules is not considered.

<u>BRIEF DESCRIPTION OF THE DRAWINGS</u>

FIG. 1 is a conceptual diagram of a staff operation planning;
FIG. 2 is a conceptual diagram of a basic work schedule and a rest time;
FIG. 3 is a block diagram illustrating the configuration of a plan creation device according to the present approach;
FIG. 4 is a diagram illustrating an example of plan basic information;
FIG. 5 is a diagram illustrating an example of timetable information;
FIGS. 6A and 6B are diagrams illustrating an example of basic work schedule definition information;
FIG. 7 is a diagram illustrating an example of evaluation condition information;
FIG. 8 is a diagram illustrating an example of task fragment information;
FIG. 9 is a diagram illustrating an example of a work schedule plan;
FIG. 10 is a block diagram illustrating the configuration of a plan creation device according to a second approach;
FIG. 11 is a flowchart of an example of processing by a work schedule plan creator;
FIG. 12 is a diagram illustrating an example in which task fragments are allocated in a collectively exhaustive manner to satisfy constraint conditions such as a time slot condition and a task continuation condition;
FIG. 13 is a diagram illustrating an example of exchange calculation;
FIG. 14 is a diagram illustrating the process of a backtracking search method using path exchange as the process of improved solution search;
FIGS. 15A and 15B are diagrams illustrating an example of backtracking search;
FIGS. 16A to 16C are diagrams illustrating an example of constraint violation;
FIG. 17 is a diagram illustrating an example in which the work schedule plan is output in a Gantt chart format;
FIG. 18 is a diagram illustrating an example in which the work schedule plan is output in a box timetable format; and
FIGS. 19A and 19B are each an explanatory diagram of a work schedule with preparation, walk, and shunting work taken into consideration;
FIGS. 20A and 20B are each an explanatory diagram of a work schedule with preparation, walk, and shunting work taken into consideration;
FIGS. 21A and 21B are explanatory diagrams of a method of providing inputs related to a preparation time, a shunting time, a walk time, and the like;
FIGS. 22A and 22B are diagrams illustrating other examples in which the work schedule plan is output in a Gantt chart format and a box timetable format, respectively;
FIG. 23 is a diagram illustrating a hardware configuration of a plan creation device that is an information processing device according to each approach.

<u>DETAILED DESCRIPTION</u>

According to one approach, an information processing device includes a processor. The processor acquires one or more pieces of train line information each including a plurality of stop positions of a train and at least one of departure and arrival times at each of the plurality of stop positions. The processor splits the one or more pieces of train line information into a plurality of parts based on replacement stop positions, among the stop positions, at which a task for working on the train can switch between staffs, to obtain a plurality of pieces of task fragment information each indicating a task of a staff corresponding to each split train line part. The processor allocates each of the plurality of pieces of task fragment information to any of a plurality of target durations to create a plurality of work schedules indicating a schedule of tasks for each of the target durations. A series of the tasks continuously allocated in each of the work schedules corresponds to a basic work schedule. Each of the work schedules includes one or more basic work schedule. The processor is configured to perform allocation of the plurality of pieces of task fragment information based on a constraint related to the basic work schedule.

The present approach will be described below with reference to the accompanying drawings.

First approach

To perform train operations, a railway company creates a staff operation plan in advance and operates trains in accordance with the created staff operation plan. The staff operation plan is typically manually created. A duty that a staff (such as an operator or a conductor) leaves the own depot, sequentially performs tasks on one or more determined trains, and then returns to the own depot for clock-out is referred to as a "work schedule" (or "work plan"). In other words, the work schedule indicates a task schedule of the staff from the own depot to clock-out. The task schedule may include not only a time of being on board a train but also various times such as a rest time, a task standby time (to be described later), a preparation time until the first task, and an organizing time after the last task.

The staff operation planning is separated into a planning of work schedules (a work schedule planning) that creates a plurality of work schedules each indicating an activity of a staff on one day, and an allocation planning that allocates each created work schedule to a staff. In the present approach, the work schedule planning is handled.

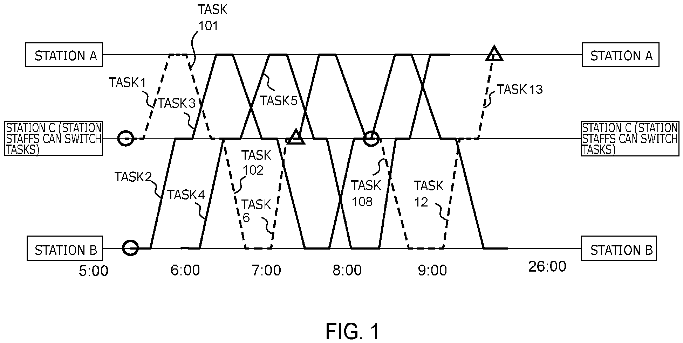

FIG. 1 is a conceptual diagram of the staff operation planning. FIG. 1 illustrates an example of a railway timetable train line on which station A and station B are turning stations. In the example of the diagram, a plurality of upbound and downbound train lines are illustrated. The direction from station B to station A is an upbound direction, and the direction from station A to station B is a downbound direction. Such train lines are often determined at a railway business operator. Staffs can switch tasks at a turning station (station A or station B) or a way station (station C) where staffs can switch tasks (i.e., the staff on the train are replaced with other staff). A station is a stop position of a train. A unit called "task" is created by disconnecting (splitting) a train line at a turning station (station A or station B) and a way station (station C). In other words, a duty of each split train line part is obtained as a "task" by splitting a normal timetable at stations (a starting station, an ending station, and any way station where staffs can switch tasks) where staffs can switch tasks. In FIG. 1, for example, task 1, task 2, ... in the upbound direction and task 101, task 102, ... in the downbound direction are illustrated. For sake of simplicity, only some tasks are provided with reference signs, but any other train line part split between stations A, B, and C corresponds to a task as well.

These tasks have properties of departure station, departure time, arrival station, and arrival time. For example, task 1 departs from station C at 05:30 and arrives at station A at 5:50. Other tasks include a task that departs from a depot in the early morning or the like and arrives a station, a task that departs from a station at night or the like and arrives at a depot, and a task obtained by splitting a train line of out-of-service or a temporary train.

In a case where tasks are defined in advance in this manner, a work schedule plan is a problem of allocating the tasks to work schedules (equivalent to staffs) in a mutually exclusive and collectively exhaustive manner. A work schedule corresponds to allocation of a plurality of tasks performed by one staff in a target duration including a start time and an end time to the target duration. In FIG. 1, seven tasks 1, 101, 102, 6, 108, 12, and 13 are allocated to a work schedule illustrated with dashed lines. There is a large interval between four tasks (1, 101, 102, and 6) in the first half and three tasks (108, 12, 13) in the second half. The interval corresponds to rest of a staff. A staff needs rest in each constant time, and thus such a plan is often created.

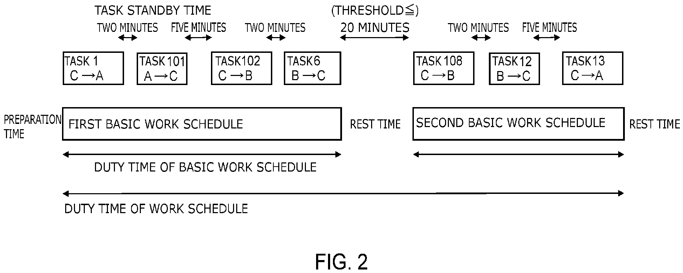

FIG. 2 is a conceptual diagram of a basic work schedule and a rest time. The work schedule with dashed lines in FIG. 1 can be expressed as a schematic diagram as illustrated in FIG. 2. FIG. 2 corresponds to a Gantt chart with time on the horizontal axis, blocks disposed in chronological order express tasks, and a departure station and an arrival station are written inside each block. In this view, the arrival station and departure station of horizontally connected adjacent blocks are the same.

A time between blocks is called a gap time. In a case where the gap time is shorter than a threshold value, two tasks sandwiching the gap time are regarded as continuous tasks. The threshold value may be determined for each station. A series of tasks defined with tasks and short gap times are referred to as a basic work schedule. In other words, a basic work schedule is from a task start or a rest to the next rest. A basic work schedule may include a preparation time (or moving for preparation) at task start, an organizing time (or moving for organization) at task end, a depot inbound time for moving vehicles from a station to a depot (or moving of a staff returning from the depot to the station after depot inbound work), and a depot outbound time for moving vehicles from a depot to a station (or moving of a staff from the station to the depot before depot outbound work). When a basic work schedule is defined in this manner, the interval between basic work schedules is a rest time. The entire work schedule can be expressed by a plurality of basic work schedules and rest times between the basic work schedules. Since a basic work schedule is part of the work schedule, the duration of the basic work schedule (which may be called "a basic duration") is shorter than the duration (target duration) of the work schedule.

A plan creation device configured to create such a work schedule according to the present approach will be described below in detail with reference to the accompanying drawings. In the following description, a target of a work schedule plan is assumed to be an operation of a train, but may be of any mobile object other than a train, such as an airplane, a ship, or an automobile, in which staffs are able to perform tasks. In this case, a stop position of the mobile object does not necessarily need to be called a station but may be called a port, a stop, or the like.

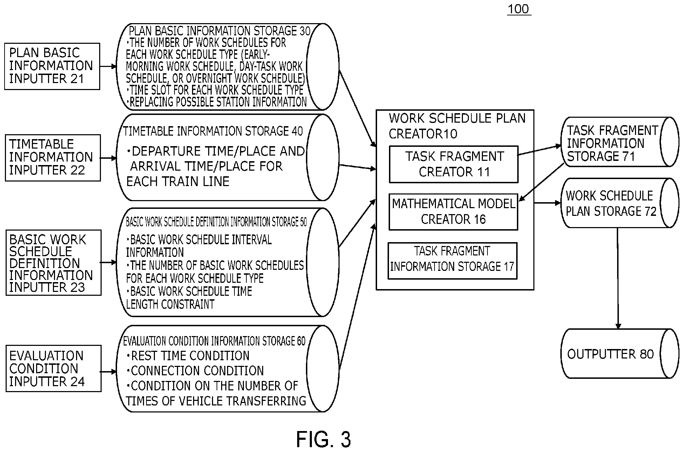

FIG. 3 is a block diagram illustrating the configuration of a plan creation device 100 according to the present approach.

The plan creation device 100 includes a plan basic information inputter 21, a timetable information inputter 22, a basic work schedule definition information inputter 23, an evaluation condition inputter 24, a work schedule plan creator 10, and an outputter 80. The work schedule plan creator 10 includes a task fragment creator 11, a mathematical model creator 16, and an optimizer 17. The plan creation device 100 includes a plan basic information storage 30, a timetable information storage 40, a basic work schedule definition information storage 50, an evaluation condition information storage 60, a task fragment information storage 71, and a work schedule plan storage 72 as storages or databases configured to store various kinds of information. The work schedule plan creator 10 corresponding to a processor configured to create a plurality of work schedules (a set of the work schedules may be called a work schedule plan) according to the present approach. The inputter 21 to 24 corresponds to input circuitry and the outputter 80 corresponds to an output circuitry.

The plan basic information inputter 21 acquires plan basic information as input information and stores the acquired information in the plan basic information storage 30. The plan basic information stored in the plan basic information storage 30 is referred to as plan basic information 30 by using the same reference sign as that of the plan basic information storage 30.

The timetable information inputter 22 acquires timetable information as input information and stores the acquired information in the timetable information storage 40. The timetable information stored in the timetable information storage 40 is referred to as timetable information 40 by using the same reference sign as that of the timetable information storage 40.

The basic work schedule definition information inputter 23 acquires basic work schedule definition information as input information and stores the acquired information in the basic work schedule definition information storage 50. The basic work schedule definition information stored in the basic work schedule definition information storage 50 is referred to as basic work schedule definition information 50 by using the same reference sign as that of the basic work schedule definition information storage 50.

The evaluation condition inputter 24 acquires evaluation condition information as input information and stores the acquired information in the evaluation condition information storage 60. The evaluation condition information stored in the evaluation condition information storage 60 is referred to as evaluation condition information 60 by using the same reference sign as that of the evaluation condition information storage 60.

The work schedule plan creator 10 creates a work schedule plan based on the plan basic information 30, the timetable information 40, the basic work schedule definition information 50, and the evaluation condition information 60 and stores the work schedule plan in the work schedule plan storage 72. The work schedule plan stored in the work schedule plan storage 72 is referred to as a work schedule plan 72 by using the same reference sign as that of the work schedule plan storage 72. The work schedule plan creator 10 may create a work schedule plan based on the plan basic information 30, the timetable information 40, and the basic schedule definition information 50 without using the evaluation condition information 60.

The outputter 80 reads the work schedule plan 72 from the work schedule plan storage 72 and outputs the work schedule plan 72 in a manner visually recognizable by a user. The outputter 80 is, for example, a display and displays the work schedule plan 72 on a screen.

The plan basic information inputter 21, the timetable information inputter 22, the basic work schedule definition information inputter 23, and the evaluation condition inputter 24 may be each an optional user operable operation device such as a keyboard, a mouse, or a touch panel. In this case, each component acquires each input information based on a user input. Alternatively, each component may be a communicator configured to receive information from an external device or the components may include a common communicator. The outputter 80 may be a communicator configured to transmit information to an external device such as a user terminal or may be a printer instead of the above-described display. The evaluation condition inputter 24 may be omitted in a case where the evaluation condition information 60 is not used.

The present device 100 will be described further in detail below.

Plan basic information 30

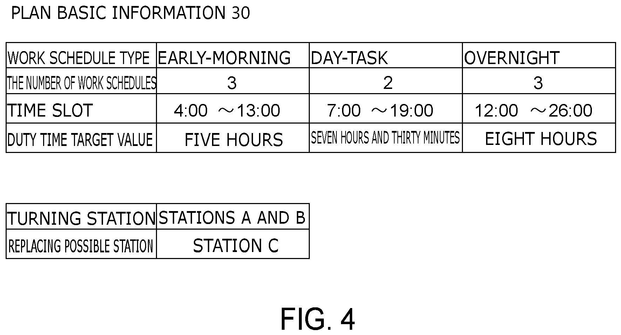

FIG. 4 illustrates an example of the plan basic information 30. The plan basic information 30 includes information such as a work schedule type, the number of work schedules, a time slot, and a duty time target value. The plan basic information 30 also includes information of turning stations and other stations than turning stations where staffs can switch tasks (these stations may be called replacing possible stations at which the staff on the train can be replaced with other staff).

The work schedule type has three kinds of an early-morning work schedule, a day-task work schedule, and an overnight work schedule, and the number of work schedules, a time slot, a duty time target value, and the like of each work schedule type are determined. In the example illustrated in FIG. 4, the number of work schedules of the early-morning work schedule, the number of work schedules of the day-task work schedule, and the number of work schedules of the overnight work schedule are three, two, and three, respectively. This corresponds to a case where three staffs are needed for an early-morning task, two staffs are needed for a day task, and three staffs are needed for an overnight task. The time slots of the early-morning work schedule, the day-task work schedule, and the overnight work schedule have 4:00 to 13:00, 7:00 to 19:00, and 12:00 to 26:00 as target durations each including a start time and an end time. This means that the duty times of the respective work schedules need to be within these ranges. In addition, the duty time target values of the early-morning work schedule, the day-task work schedule, and the overnight work schedule are five hours, seven hours 30 minutes, and eight hours, respectively. Although only a target value is indicated in this example, at least one of an upper limit value and a lower limit value may be included as well.

The work schedule type has the three kinds of the early-morning work schedule, the day-task work schedule, and the overnight work schedule in this example but may have any other kind. For example, the early-morning work schedule is typically performed on the next day of the overnight work schedule, and thus a work schedule (referred to as a night-to-morning work schedule) as connection of the overnight work schedule and the early-morning work schedule may be defined. In this case, the work schedule type has only two kinds of the night-to-morning work schedule and the day-task work schedule, and conditions such as the number of work schedules and the like are determined for each work schedule. Moreover, the early-morning work schedule and the overnight work schedule are often integrally operated in the order of the overnight work schedule -> the early-morning work schedule, and thus a period from the start time of the overnight work schedule to the end time of the early-morning work schedule may be regard as a duty time and a target value may be determined. In addition, a target value for the sum of the duty times of the early-morning work schedule and the overnight work schedule may be determined.

Since the early-morning work schedule is often performed on the next day of the overnight work schedule, in the example illustrated in FIG. 4, the number of work schedules is the same between the early-morning work schedule and the overnight work schedule even in a case where the work schedule type has three kinds. However, for example, in a case where a temporary timetable is included, the number of work schedules may be different between the early-morning work schedule and the overnight work schedule.

Timetable information 40

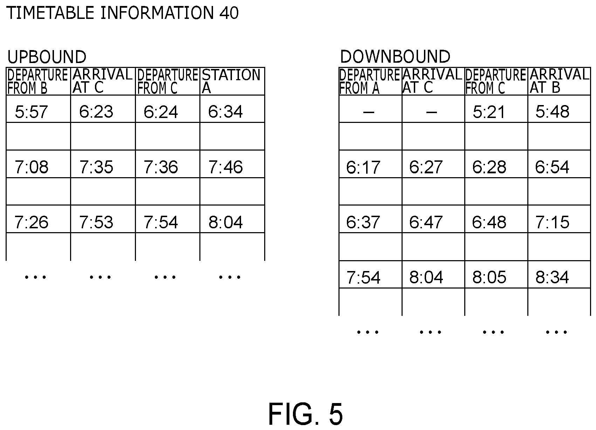

FIG. 5 illustrates an example of the timetable information 40. The timetable information 40 includes information (line information) of a train line related to an operation from a starting point to an ending point. Specifically, the line information is information including at least the departure and arrival times of each station from the starting point to the ending point. In the example illustrated in FIG. 5, the line information is defined for each of an upbound operation and a downbound operation, the line information does not need to be separately defined for each of an upbound operation and a downbound operation in a case of a work schedule on which an upbound operation and a downbound operation are not distinguished. In this example, only departure and arrival times related to a turning station (station A, station B) or a way station (station C) where staffs can switch tasks are indicated, but the timetable information 40 may be defined for each of types such as weekday, Saturday, and holiday (or Saturday-holiday as collection of Saturday and holiday). The number of way stations where staffs can switch tasks is one in the example illustrated in FIG. 5 but may be two or more.

Basic work schedule definition information 50

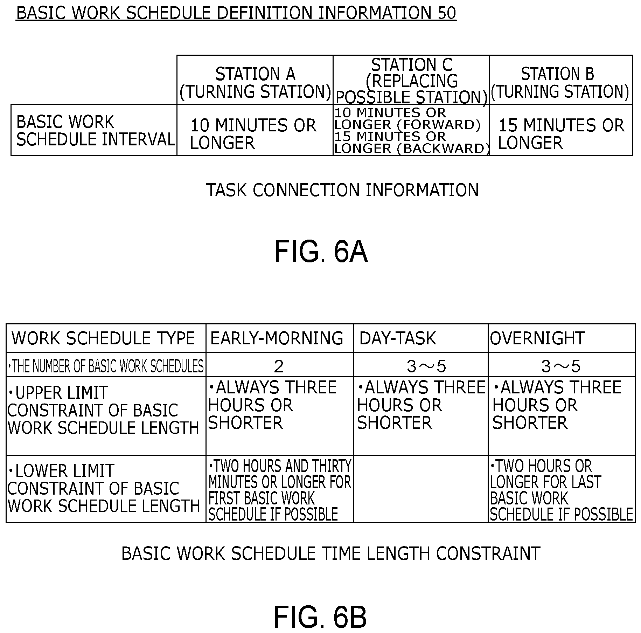

FIGS. 6A and 6B illustrate an example of the basic work schedule definition information 50. The basic work schedule definition information 50 determines a constraint or information related to a basic work schedule. Since discontinuity between basic work schedules is defined by the size of an interval (such as a rest time) as described above, a basic work schedule is determined by determining the size of the interval (referred to as a basic work schedule interval). The basic work schedule definition information 50 includes staff connection information and time length constraint information of a basic work schedule as illustrated in FIGS. 6A and 6B.

FIG. 6A illustrates an example of task connection information. The task connection information determines the basic work schedule interval for each station. For example, the basic work schedule interval at station A is an interval of 10 minutes or longer, and this means that in a case where two tasks are separated from each other by 10 minutes or longer, the two tasks are set as different basic work schedules. In company rules or the like, it is often determined that, for example, the next task starts immediately after the previous task ends in a case where the basic work schedule interval is short, and a rest place is temporarily used in a case where the basic work schedule interval is long. A slightly longer value of 15 minutes or longer is set as a basic interval at station B, and this reflects that a required time for staff turning is long at station B. In this example, task connection is defined based on an interval time, but task connection may be defined in accordance with the order of trains like "connection is always made to a task that departs next after arrival" or "connection is always made to a task that departs after the next after arrival".

In a case of a mid-way station such as station C, the size of the basic work schedule interval may be different between the kinds of directions (upbound and downbound directions) of the previous task and the next task. For example, the basic work schedule interval may be set to be short in a case where the task directions are the same (transferring to a train in the same direction or performing the task on the same train without transferring), and may be set to be long in a case where the task directions are opposite (transferring to a train in the opposite direction or turning at an ending station). It may be set that the opposite task directions are prohibited.

FIG. 6B illustrates an example of the time length constraint information of a basic work schedule. The time length constraint information of a basic work schedule determines, for example, the number of basic work schedules and an upper limit constraint and lower limit constraint of a basic work schedule length.

The number of basic work schedules is determined for each type such as the work schedule type (early-morning work schedule/day-task work schedule/overnight work schedule). In this example, the number of basic work schedules of the early-morning work schedule is two, the number of basic work schedules of the day-task work schedule is three to five, and the number of basic work schedules of the overnight work schedule is three to five. A meal rest is often provided in an operation of any work schedule type, and thus the number of basic work schedules is typically equal to or larger than two. There are various conditions (constraints) for a meal rest as described later, and any condition related to a meal rest may be included in part of the basic work schedule definition information 50.

An upper limit constraint and a lower limit constraint for the basic work schedule length determine maximum and minimum lengths of the basic work schedule length. The upper limit constraint of the basic work schedule length is often strictly determined by company rules or the like. Since continuation of short basic work schedules would result in stress on a staff such as increase of round-trip walk distance to a rest place, a lower limit condition on the basic work schedule length is often determined. Furthermore, since it is sometimes difficult to have a rest in the early morning or late at night, the basic work schedule length is desired to be long in some cases.

The number of basic work schedules corresponds to the number of times of rest and the basic work schedule length corresponds to the length of a continuous task, and thus equalization of the number of basic work schedules and the basic work schedule length among staffs (work schedules) is important as an indicator of fairness among the staffs.

In addition, there are a large number of constraints and evaluation items related to a basic work schedule as described later, and they may be input from a user or an external device as necessary. There could be conditions such as:

"a task on the first half of a basic work schedule may be long but a task on the second half needs to be short as possible"
"long basic work schedules are not to be continuous"
"in a case of three basic work schedules, the second and third basic work schedules need to be short"
"a long task after a meal rest is preferred"

Evaluation condition information 60

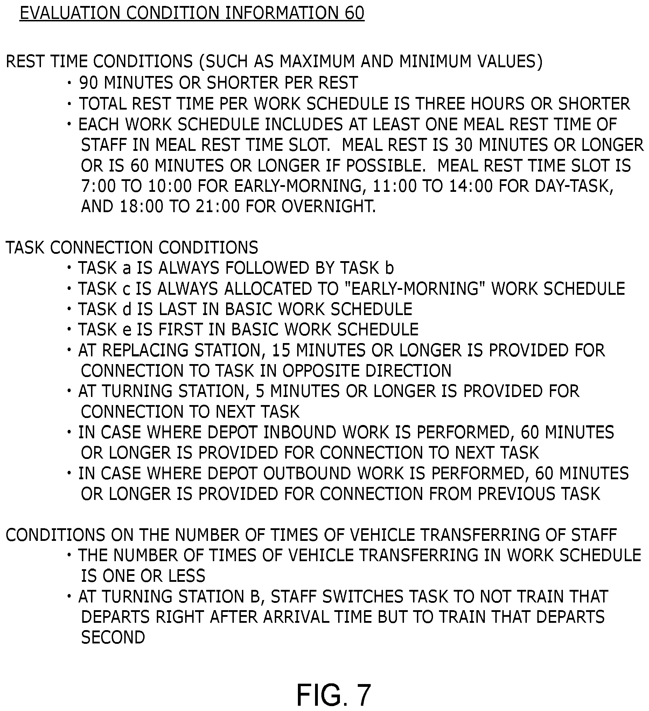

FIG. 7 illustrates an example of the evaluation condition information 60. The evaluation condition information 60 determines conditions (constraints) widely used in a work schedule plan. As illustrated in FIG. 7, the conditions are as follows.

. Rest time conditions (such as maximum and minimum values)

- Each rest time is 90 minutes or shorter
- The total rest time of each work schedule is three hours or shorter
- Each work schedule includes at least one rest time of a staff in a meal rest time slot. Each meal rest time is 30 minutes or longer and is preferably 50 minutes approximately. The meal rest time slot is 7:00 to 10:00 for the early-morning work schedule, 11:00 to 14: 00 for the day-task work schedule, and 18:00 to 21:00 for the overnight work schedule.

. Task connection condition

- Task a is always followed by task b
- Task c is always allocated to the "early-morning" work schedule
- Task d is last in a basic work schedule
- Task e is first in the basic work schedule
- At a replacing station, 15 minutes or longer is provided for connection to a task in the opposite direction (transferring to a vehicle in the opposite direction among the upbound and downbound directions)
- At a turning station, five minutes or longer is provided for connection to the next task (before the next task starts)

· In a case where depot inbound work is performed after a task, 60 minutes or longer is allocated for connection to the next task
· In a case where depot outbound work is performed before a task, 60 minutes or longer is allocated for connection from the previous task
· Conditions on the number of times of vehicle transferring of staff

- The number of times of vehicle transferring on a work schedule is one or less

· At turning station B, a staff switches a task to not a train that departs right after an arrival time but to a train that departs second

The depot inbound work and depot outbound work of the task connection condition will be supplementarily described below. Timetable data is typically denoted by information indicating depot outbound and inbound work of vehicles. For example, in FIG. 1, a part indicating depot outbound work is denoted by a triangle and a part indicating depot inbound work is denoted by a circle. In a case where a circle for depot outbound work is provided at station C, depot outbound work of vehicles from a depot to station C is performed in reality before this main line timetable. In a case where a triangle is provided at station C, depot inbound work of vehicles from station C to a depot is performed after this main line timetable. These depot outbound work and depot inbound work are tasks of staffs in some cases.

For example, depot outbound work is a task of a staff at a task right after depot outbound work in some cases. In such a case, the staff needs a long interval time before his task starts, including not only a depot outbound work time but also a time of initial moving from a station to a depot and a time of train inspection. Thus, a sufficient time needs to be provided in a case where a task is allocated before an outbound task.

Similarly, in a case where depot inbound work is a task of a staff at a task right before depot inbound work, not only the depot inbound work but also a time of train inspection, a time of return to a depot, and the like are needed, and thus a sufficiently long interval time needs to be provided after task end.

In a case where depot inbound and outbound work is performed during a rest time, moving between a station and a depot is needed and thus it is desired to avoid depot inbound and outbound work during a rest time in some cases. In such a case, it is sometimes desired to allocate the first task on a work schedule to depot outbound work if possible and allocate the last task on the work schedule to depot inbound work if possible.

Task fragment information 71

Task fragment information 71 is created by the task fragment creator 11 to be described later and is used by the mathematical model creator 16 and the optimizer 17. The created task fragment information is stored in the task fragment information storage 71. The task fragment information stored in the task fragment information storage 71 is referred to as the task fragment information 71 by using the same reference sign as that of the task fragment information storage 71. The task fragment information 71 may be input by a user, and in this case, the task fragment information input from the user is stored in the task fragment information storage 71. The task fragment creator 11 may be omitted.

The task fragment creator 11 creates the task fragment information from the timetable information 40. The task fragment creator 11 cuts a timetable into one-way train lines based on the timetable information 40 and further splits each train line at replacing possible stations, thereby creating the task fragment information 71 indicating a task between stations thus split. The task fragment creator 11 stores the created task fragment information 71 in the task fragment information storage 71. For example, in the example illustrated in FIG. 5, each upbound or downbound train line is split at replacing possible stations to obtain the task fragment information 71 indicating a task between stations thus split.

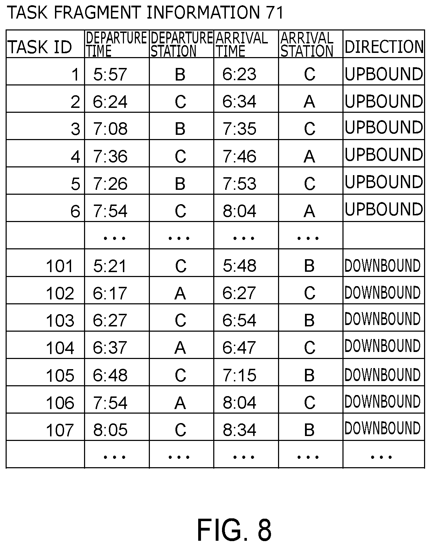

FIG. 8 illustrates an example of the task fragment information 71. The task fragment information 71 indicates information of each task. Each task includes at least property information such as a task ID, a departure time, a departure station, an arrival station, and an arrival time. Task kilometer information indicating the distance from the departure station to the arrival station may be added.

Work schedule plan 72

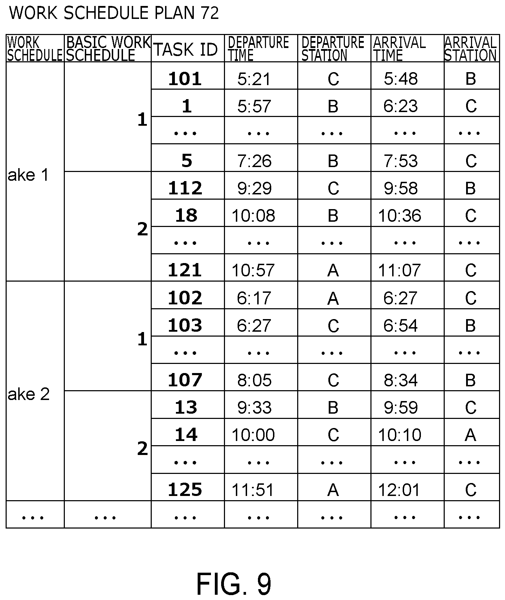

The work schedule plan 72 created and output by the work schedule plan creator 10 will be described below with reference to FIG. 9 before description of the mathematical model creator 16 and the optimizer 17 of the work schedule plan creator 10.

FIG. 9 illustrates an example of the work schedule plan 72. The work schedule plan 72 is information that a plurality of work schedules are each associated with a plurality of tasks. In the example illustrated in FIG. 9, the work schedule plan 72 includes each work schedule, a plurality of basic work schedules included in each work schedule, a plurality of tasks included in each basic work schedule, and the departure time, departure station, arrival station, and arrival time of each task. For example, the required time of each task and task kilometer (travel distance of a train of the task; also referred to as task distance) may be included as other information. In the diagram, "ake 1" and "ake 2" are work schedules of the early-morning work schedule type.

Problem setting

Task continuation condition, turning and transferring continuation conditions, and time slot condition

Conditions (constraints) that tasks allocated to each work schedule are temporally and spatially connectable (executable) will be described below. In a case where each task has four pieces of information of a departure station, a departure time, an arrival place, and an arrival time, continuous tasks (the preceding task is denoted by a, and the following task is denoted by b) belonging to the same work schedule need to satisfy two conditions (1) and (2) below. The continuous tasks may be continuous tasks in a basic work schedule or may be a task at the end of the temporally preceding basic work schedule of two basic work schedules and a task at the start of the temporally following basic work schedule. These conditions are referred to as a task continuation condition, and the task continuation condition needs to be set and satisfied when a work schedule plan (a plurality of work schedules) is to be created.

$$\text{Arrival station of } a = \text{Departure station of } b \ ... \ (1)$$

$$\text{Arrival time of } a \leq \text{Departure time of } b \ ... \ (2)$$

For continuous tasks a and b belonging to the same work schedule, additional continuation conditions related to turning or transferring of a vehicle are necessary in addition to the task continuation condition in some cases. For example, at turning at a last station, a time is necessary for a staff to move, task b cannot be performed after task a in some cases even when the condition of Equation (2) is satisfied. In this case, a condition of the relation between an arrival time and a departure time, including the moving time is set. This condition is referred to as a turning condition. At a way station, it is not allowed to perform task b after task a in the opposite direction (for example, task a is a task on a train line in the upbound direction, and task b is a task on a train line in the downbound direction) in some cases. In such a case, a condition that prohibits execution of such continuous tasks is set. This condition is referred to as a transferring continuation condition. In a case where the transferring continuation condition is set, the transferring continuation condition needs to be satisfied to create a work schedule plan (a plurality of work schedules).

Definitions of basic work schedule time, rest time, and duty time

The duty time of a work schedule (time from the start time of the work schedule to the end time) includes a task time and a task standby time (refer to FIG. 2 described above). The task time is a time in which a staff is actually on board a train, and the task standby time is a time from the end time of the previous task to the start time of the next task.

The task standby time needs to be equal to or longer than a lower limit value (denoted by x) in minutes determined for each station. The task standby time equal to or longer than a threshold value (denoted by y) corresponds to a rest time. Thus, the task standby time shorter than y minutes is not regarded as rest.

A basic work schedule corresponds to a series of tasks with inter-task standby shorter than y minutes. The duty time of a basic work schedule (time from the start time of the basic work schedule to the end time) is expressed by the sum of a series of tasks and any gap time (equal to or longer than x minutes and shorter than y minutes) between the tasks. The duty time of a work schedule is expressed by the sum of a series of basic work schedules and any rest time (task standby equal to or longer than y minutes).

The lower limit value x of the task standby time in minutes and the threshold value y of the rest time in minutes may be different among stations.

A work schedule, a basic work schedule, and rest that are determined as described above need to satisfy the following conditions based on labor regulations, work rules, and various agreements.

· The duty time of a work schedule needs to be included in a time slot determined for each of the early-morning work schedule, the day-task work schedule, and the overnight work schedule. This is referred to as a time slot condition. In the time slot condition, a condition related to a start time is referred to as an earliest start time condition, and a condition related to an end time is referred to as a latest end time condition.

· The duty time of a basic work schedule needs to be equal to or shorter than an upper limit value. However, the duty time of a basic work schedule is desirably as long as possible in a range shorter than the upper limit time.

· Each work schedule needs to have a rest time of 60 minutes or longer in total. However, the rest time needs to be within a time slot range predetermined for each work schedule.

· The duty time, the number of times of rest, the total duty time of basic work schedules, and the total time of tasks are desirably each equalized among the early-morning work schedule, the day-task work schedule, and the overnight work schedule.

Details of problem setting

The mathematical model creator 16 of the work schedule plan creator 10 formulates a mathematical model on which the above-described problem setting is reflected. The mathematical model defines minimization or quasi-minimization of the value (evaluation value) of an objective function (evaluation function) under various constraints, the objective function being a function to calculate the sum of penalty values of respective work schedules as a penalty value of the entire work schedule plan. The optimizer 17 obtains a work schedule plan by solving the mathematical model.

With a constraint that each task is allocated to any of p + q + r work schedules in a collectively exhaustive manner, where I represents a set of all tasks, J represents a set of all work schedule candidates, p represents the number of early-morning work schedules, q represents the number of day-task work schedules, and r represents the number of overnight work schedules, the mathematical model can be formulated as described below.

$$\min. \quad \sum_{j \in \mathcal{J}} c_j^a x_j + c_j^n y_j + c_j^t z_j, \tag{3}$$

$$\text{s.t.} \quad \sum_{j \in \mathcal{J}} a_{ij}(x_j + y_j + z_j) = 1, \quad \forall i \in \mathcal{I} \tag{4}$$

$$\sum_{j \in \mathcal{J}} x_j = p, \tag{5}$$

$$\sum_{j \in \mathcal{J}} y_j = q, \tag{6}$$

$$\sum_{j \in \mathcal{J}} z_j = r, \tag{7}$$

$$x_j, y_j, z_j \in \{0, 1\}, \qquad \forall j \in \mathcal{J}. \tag{8}$$

In the above equations,

· I: set of tasks

· J: set of work schedule candidates executable as any of early-morning, day-task, and overnight work schedules

• p, q, r: the numbers of early-morning, day task, and overnight work schedules

· $c_j^a$, $c_j^n$, $c_j^t$: constants indicating penalties when work schedule candidate j is employed as early-morning, day task, and overnight work schedules, respectively

· $a_{ij}$: constant that is "1" in a case where work schedule candidate j includes task i or "0" otherwise

· $x_j$, $y_j$, $z_j$: variables that are "1" in a case where work schedule candidate j is employed as early-morning, day task, and overnight work schedules, respectively, and "0" otherwise.

Equation (3) indicates minimization of an objective function that calculates the sum of penalties of work schedules as an evaluation value. Note that $c^a_j$, $c^n_j$, and $c^t_j$ as the penalties of the early-morning, day task, and overnight work schedules, respectively, when a task line of work schedule candidate j is provided to the respective work schedules are calculated by a method described later.

Constraint Equation (4) indicates a set partitioning constraint. Specifically, it is indicated that a work schedule candidate is employed as one of the early-morning, day task, and overnight work schedules and a task is included in only one work schedule candidate (basic work schedule).

Constraint Equations (5) to (7) are constraints indicating that the total number of early-morning work schedules is p, the total number of day-task work schedules is q, and the total number of overnight work schedules is r, respectively.

Constraint Equation (8) is a constraint indicating that variables $x_j$, $y_j$, and $z_j$ are variables that have the value of "0" or "1".

The mathematical model creator 16 of the work schedule plan creator 10 generates the set J of work schedule candidates to create a mathematical model formulated by the above-described equations. Specifically, the mathematical model creator 16 generates candidates (work schedule candidates) for all work schedules that satisfy, for example, the task continuation condition, the turning condition, the transferring continuation condition, the time slot condition, and the conditions related to a basic work schedule described above. Accordingly, the set J is generated and a constant $a_{ij}$ is determined. Specifically, the work schedule plan creator 10 generates a plurality of patterns of a plurality of work schedule candidates in which each of a plurality of pieces of task fragment information (refer to FIG. 8) is allocated to each of a plurality of target durations (duration from start to end of a work schedule). This corresponds to the set J. A variable that expresses, with "0" or "1", whether to select a work schedule candidate in each pattern for each of the plurality of target durations corresponds to the above-described variable x.

Subsequently, the work schedule plan creator 10 determines, for each work schedule candidate, penalty values ($c^a_j$, $c^n_j$, and $c^t_j$) for the respective cases of early-morning, day task, and overnight work schedules (a method will be described later). The penalty values correspond to penalty values determined in accordance with satisfied states of various constraints in a case where the above-described work schedule candidate is selected.

The optimizer 17 obtains a work schedule plan solution by solving the mathematical model created by the mathematical model creator 16 based on the above-described parameters (the set J of work schedule candidates, the constant $a_{ij}$, and the penalty values ($c^a_j$, $c^n_j$, $c^t_j$)), in other words, by minimizing or quasi-minimizing the objective function. The work schedule plan solution is a result of allocation of a plurality of tasks to each work schedule (early-morning, day task, or overnight work schedule) in a collectively exhaustive manner. Specifically, the early-morning, day task, and overnight work schedules are obtained by selecting work schedules with $x_j$, $y_j$, and $z_j$ being "1" in the solution from among the work schedule candidates created as the above-described set J.

A mathematical plan solver such as Gurobi or CPLEX may be used to solve the mathematical model. A meta-heuristic solution method such as gradient method, simulated annealing, or genetic algorithm may be used as a solution method. The mathematical plan solver may be configured by an external server connected to the present device through a network such as the Internet. In this case, the present device transmits data of an optimization problem to the mathematical plan solver and acquires data of a solution acquired by the mathematical plan solver.

A method of generating only some work schedule candidates instead of generating all work schedule candidates in advance, or a method of sequentially generating work schedule candidates as necessary, such as a column generation method may be used.

Variations of objective function (evaluation function)

Evaluation functions as described below may be designed in accordance with setting of the basic work schedule definition information 50 and the evaluation condition information 60.

(1) Executable work schedules may be limited by the following conditions based on labor regulations, work rules, and various agreements.

(1-1) Condition (time slot condition) that the duty time of a work schedule is included in a time slot determined for each of the early-morning work schedule, the day-task work schedule, and the overnight work schedule.
(1-2) Condition (work schedule duty time condition) that the duty time of a work schedule is equal to or longer than a lower limit value or is equal to or shorter than an upper limit value.
(1-3) Condition (basic work schedule duty time condition) that the duty time of a basic work schedule is equal to or longer than a lower limit value or is equal to or shorter than an upper limit value.
(1-4) Condition (task kilometer condition) that the task kilometer (task distance) of a work schedule or a basic work schedule is equal to or longer than a lower limit value or is equal to or shorter than an upper limit value.
(1-5) Condition that the rest time of each work schedule is equal to or longer than a lower limit value or is equal to or shorter than an upper limit value. Condition (rest time condition) that the rest time is included in a constant time slot (for example, a meal time slot) and equal to or longer than a lower limit value. Condition (rest time condition) that the rest time is included in a constant time slot (for example, a meal time slot) and equal to or shorter than an upper limit value.

(1-6) Task v is not allocated after task u. Task v is allocated after task u (task connection condition).

(1-7) Task u is the first task of a work schedule or a basic work schedule (initial task condition).

(1-8) Task u is not allocated to the early-morning work schedule (nor the day-task work schedule and the overnight work schedule) (task work schedule correspondence condition). Alternatively, task u is always allocated to the early-morning work schedule (task work schedule correspondence condition).

(2) The following penalty values may be calculated and evaluated for a work schedule based on labor regulations, work rules, and various agreements. A penalty value may be added to the value of the above-described evaluation function. Alternatively, a term that adds a penalty value may be included in the evaluation function.

(2-1) In a case where the above-described time slot condition and a target value are not satisfied, a penalty value corresponding to the absolute value of a time deviated from a time slot or a penalty value corresponding the absolute value of the degree of deviation from the target value is added.

(2-2) A target value and upper and lower limits of the task kilometer (task distance) instead of the duty time are set for a work schedule or a basic work schedule, and a penalty value is added for the degree of deviation thereof.

(2-3) In the above description, a penalty value obtained by replacing the absolute value of the degree of deviation with the square, cube, or power (for example, 2 to the power of "the degree of deviation") ... of the degree of deviation is added. Alternatively, a quotient obtained by dividing the absolute value of the degree of deviation by n minutes may be calculated (for example, with n = 10 minutes, the penalty value is "2" in a case of deviation of 25 minutes and the penalty value is "0" in a case of deviation of seven minutes), and the absolute value of the quotient or the square, cube, or power, ... of the quotient may be set as the penalty value. A maximum value may be determined in a case where these values are too large.

(2-4) In a case where a condition that needs to be satisfied whenever possible is not satisfied, a penalty value calculated by the number of times of violation × a predetermined weight is added. In a case where a condition that needs to be always satisfied is not satisfied, the predetermined weight is increased and a penalty value calculated by the number of times of violation × the large predetermined weight is added.

(2-5) To assure fairness, target values of the duty time, the number of times of rest, the total duty time of a basic work schedule, the total time of tasks, and the like are calculated in advance for each of a group of early-morning work schedules, a group of day-task work schedules, and a group of overnight work schedules, and a penalty value related to deviation from either target value is added.

The formulation of the present approach is an example and may be extended in various forms. For example, in a case where a free ride that an off-duty staff moves by using a work schedule on which another staff performs a task is to be included in the formulation, the free ride can be handled in the framework of the present formulation by preparing a task at which a free ride is made.

In the formulation of the present approach, the penalty value of the entire work schedule plan is evaluated as the sum of the penalties of respective work schedules, but a condition that the duty time, the number of times of rest, the total duty time of a basic work schedule, the total time of tasks, and the like are equalized in each of a group of early-morning work schedules, a group of day-task work schedules, and a group of overnight work schedules may be considered. For example, a penalty value may be calculated with the condition taken into consideration for each of the group of early-morning work schedules, the group of day-task work schedules, and the group of overnight work schedules, and the penalty values may be summed to calculate the penalty value of the entire plan.

As described above, according to the present approach, a work schedule part from a rest to another rest is handled as a basic work schedule, and a work schedule plan is automatically created so that the number of basic work schedules, constraints (lower and upper limit values) related to the time length of a basic work schedule, target values, and the like are satisfied as much as possible for each of the early-morning, day-task, and overnight work schedule types. Accordingly, a work schedule plan with which the number of times of connection and the number of times of rest can be reduced while work schedule fairness is kept can be created.

Second approach

In the first approach, a work schedule plan is acquired by directly solving the mathematical model, but the amount of calculation processing or calculation time can be large when the number of work schedule candidates that satisfy various constraints, corresponding to the set J is significantly large. Thus, in the second approach, a method by which the amount of calculation processing or calculation time can be reduced for a large-volume problem is used.

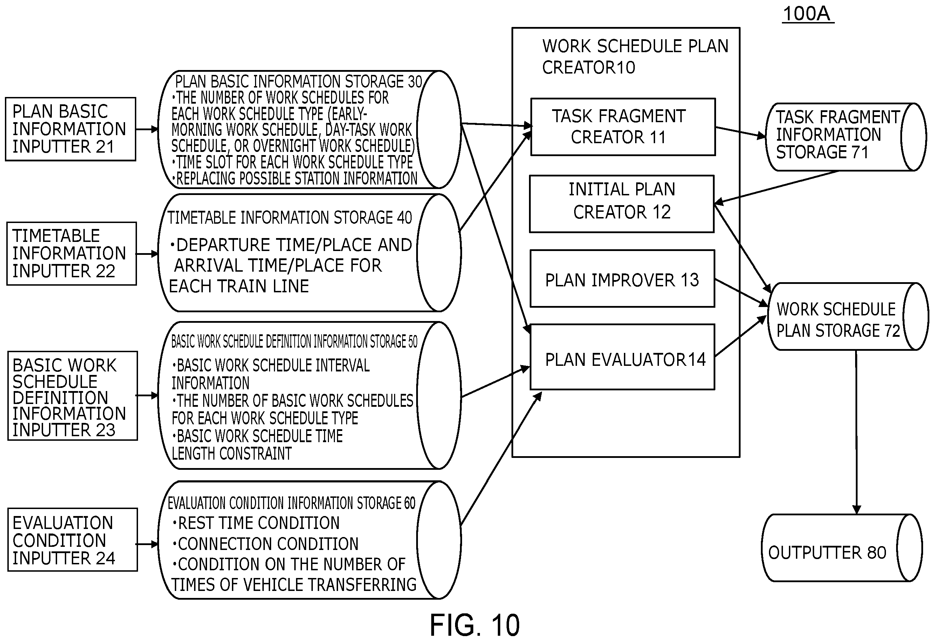

FIG. 10 is a block diagram illustrating the configuration of the plan creation device 100 according to the second approach. An element having the same name as in the first approach is denoted by the same reference sign, and description thereof is omitted as appropriate. The work schedule plan creator 10 is different from in the first approach. The work schedule plan creator 10 includes the task fragment creator 11, an initial plan creator 12 (initial solution generator), a plan improver 13, and a plan evaluator 14. The task fragment creator 11 is the same as in the first approach. The work schedule plan creator 10 corresponds to a processor configured to create a plurality of work schedules (work schedule plan) according to the present approach.

The initial plan creator 12 creates an initial solution (provisional solution) of a work schedule plan. The plan improver 13 creates a solution (provisional solution) improved from an initial solution. The plan evaluator 14 evaluates a work schedule plan solution (provisional solution).

The procedure of work schedule plan creation at the work schedule plan creator 10 will be described below.

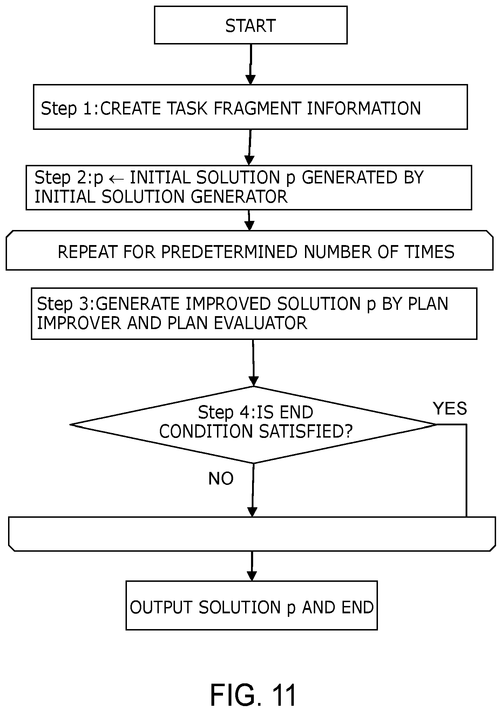

FIG. 11 is a flowchart of an example of processing by the work schedule plan creator 10.

At Step 1, the task fragment creator 11 creates the task fragment information from the timetable information 40. The creation may be performed by the same method as in the first approach. Accordingly, the task fragment information as illustrated in FIG. 8 is created.

At Step 2, the initial plan creator 12 generates, based on the task fragment information 71 and the like, an initial solution (initial plan) of a work schedule plan, which satisfies a 1:1 condition, an earliest start time condition, and a continuous task condition. The 1:1 condition corresponds to a constraint that a plurality of tasks are allocated to work schedules in a mutually exclusive and collectively exhaustive manner. Specifically, the initial plan creator 12 generates, as an initial solution, a provisional solution by which each of a plurality of pieces of the task fragment information is allocated to any of a plurality of target durations corresponding to a plurality of work schedules to be generated.

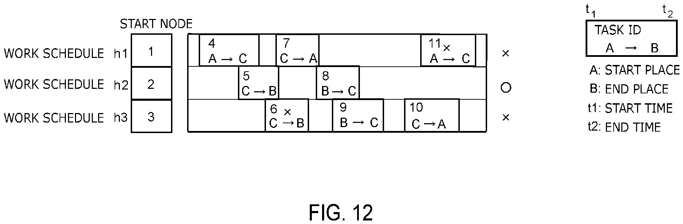

Consider a situation illustrated in FIG. 12 as a specific situation to describe an execution example of the initial solution creation.

FIG. 12 illustrates an example in which, based on the task fragment information 71 in FIG. 8 and the basic work schedule definition information 50 (the number of basic work schedules, in particular) in FIGS. 6A and 6B, the task fragment information is allocated in a table with work schedule (staff) on the vertical axis and time on the horizontal axis in a collectively exhaustive manner to satisfy constraints such as the time slot condition and the task continuation condition. In this case, there are eight tasks 4 to 11. In the present example, it is assumed as the time slot condition that, for example, tasks 4 to 8 are allocatable to the first basic work schedule of early-morning work schedule h1, tasks 5 to 10 are allocatable to the first basic work schedule of day-task work schedule h2, and tasks 7 to 11 are allocatable to the first basic work schedule of overnight work schedule h3. As an example of the task continuation condition, for example, the end place of task 4 is place C and thus tasks 8, 9, and 11, the start place of which are not place C, cannot be allocated next to task 4. In addition, the start time of task 5 is earlier than the end time of task 4, and thus task 5 cannot be allocated next to task 4.

As a scheme of allocation, tasks may be first sorted based on their departure times and then each subjected to greedy allocation to a work schedule. For example, any work schedule without allocation is prioritized, and then tasks are preferentially allocated to a work schedule the arrival time of the last task of which is earliest among work schedules with allocation. In the case of tasks 4 to 11 in FIG. 12, tasks 4 to 11 are in the order of departure time and thus can be allocated in this order. The first task 4 is allocated to work schedule h1. Task 5 is allocated to work schedule h2 since a work schedule without allocation is prioritized. Task 6 is allocated to work schedule h3 since a work schedule without allocation is prioritized. Subsequently, since there is no work schedule without allocation, task 7 is allocated to work schedule h1, the arrival time of the last task of which is earliest (with the earliest arrival time among task 4 allocated last on work schedule h1, task 5 allocated last on work schedule h2, and task 6 allocated last on work schedule h3) among work schedules with allocation. As a method of allocation, a constraint (in this example, the time slot condition) may be considered in the case of greedy allocation and allocation may be preferentially made to a work schedule that satisfies the time slot condition among work schedules to which allocation is possible. In the example illustrated in FIG. 12, tasks 11 and 6, which are prohibited to be allocated, are allocated to work schedules h1 and h3, respectively, and thus the time slot condition is not satisfied and tasks 11 and 6 are denoted by crosses and work schedules h1 and h3 are denoted by crosses. Work schedule h2 satisfies constraints (such as the time slot condition) and thus is denoted by a circle.

At Step 3, the plan improver 13 generates an improved solution (new provisional solution) by improving the initial solution (provisional solution) at start by using the plan evaluator 14. The plan evaluator 14 calculates the evaluation value of the provisional solution based on a constraint related to a basic work schedule and the like. The plan improver 13 updates the provisional solution so that the evaluation value of the provisional solution improves. At Step 4, it is determined whether an end condition is satisfied, and in a case where the end condition is satisfied, the current improved solution is output and the present processing ends. As in the first approach, the work schedule plan 72 as illustrated in FIG. 9 is obtained as the output improved solution. In a case where the end condition is not satisfied, the process returns to Step 3 and the processing of improved solution generation (update) is repeated. The end condition is such that, for example, the penalty value of the improved solution becomes equal to or smaller than a predetermined value or a calculation time upper limit is reached. In this manner, at Step 3, the improved solution (new provisional solution) is generated by improving the initial solution (provisional solution) at start, and further improvement of the improved solution is recursively repeated (the improved solution is repeatedly updated), thereby generating a solution with a small evaluation value (for example, the sum of the penalty value of each work schedule). Step 3 will be described below in detail.

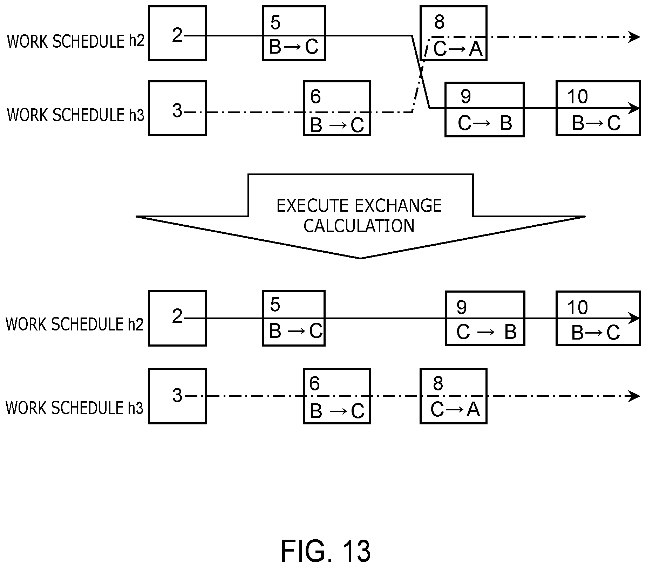

FIG. 13 illustrates an example of exchange calculation performed at Step 3. The exchange calculation is calculation called "exchange" in which all allocated tasks after a certain time point are interchanged between two work schedules in a provisional solution (initial solution or improved solution), and the exchange calculation is repeated to sequentially generate new provisional solutions. For this, for example, a backtracking search method using path exchange, which is disclosed in Japanese Patent No. 5075577 may be used. In the example illustrated in FIG. 13, a task line after task 8 on work schedule h2 and a task line after task 9 on work schedule h3 are interchanged.

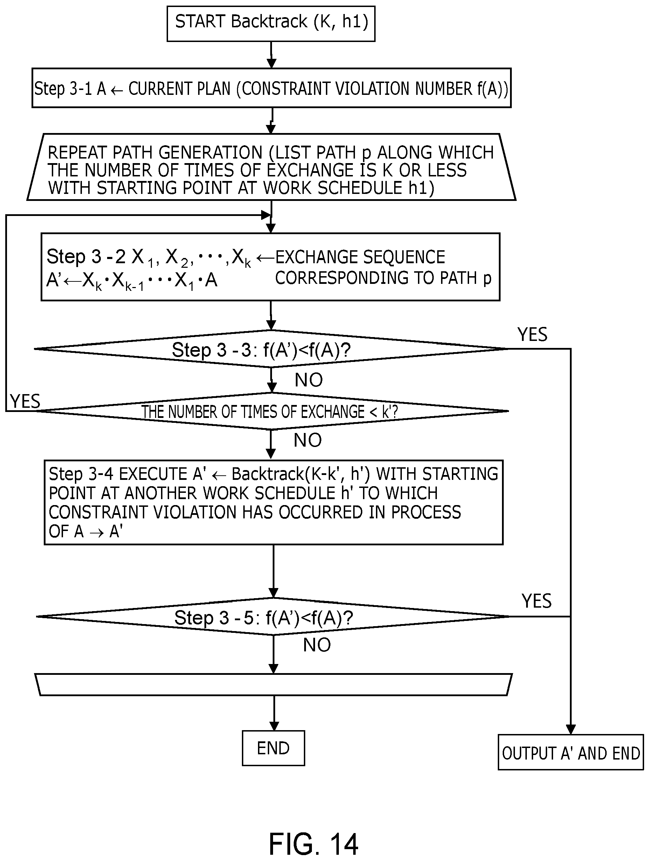

FIG. 14 illustrates the process of the backtracking search method using path exchange as the process of improved solution search at Step 3. Input work schedule h1 (starting work schedule) is one of work schedules (starting work schedules) having a penalty value larger than zero. In addition, K is a parameter that determines an upper limit for the number of times of exchange of paths generated as described below. The present method is processing intended to find an improved solution by consecutively generating exchange to generate various kinds of provisional solutions. The following describes a method of generating K times of consecutive (continuous) exchange calculation. Specifically, consider a node line path (referred to as a change path) with a starting point at a start node of a starting work schedule on a network constituted by nodes as tasks and arcs as the conjunction relation between tasks. When nodes on a work schedule path are arranged, consecutive exchange calculation can be generated by generating exchange based on a part of transition from a work schedule to another work schedule.

In the present method, the evaluation value (penalty) f(A) of current plan A (initial solution) is calculated first (Step 3-1). A method of calculating the evaluation value (penalty) will be described later. The method of calculating the evaluation value of the present approach may be applied to the first approach.

Subsequently, a path on which the number of times of exchange is K times or less from the first node of starting work schedule h1 is searched and a solution (provisional solution) A' obtained based on the path is generated (Step 3-2). In the block of Step 3-2, "Xk·Xk-1 ... X1·A" schematically expresses sequential exchange of tasks in provisional solution A in accordance with path p, and "X1, X2, ..., Xk" schematically expresses a solution after the exchange.

At Step 3-3, it is determined whether f(A) > f(A') holds, and an improved solution is found in a case of f(A) > f(A'), and thus provisional solution A' is output and the present processing ends. Otherwise, the process returns to Step 3-2 and processing of searching for the next path is performed. An improved solution is defined for a solution (provisional work schedule plan; in this example, A) and is a solution for which the value of an evaluation function f(A) that calculates the sum of penalty values as an evaluation value is smaller than the original value. After provisional solution A' is output, the present processing may be repeatedly executed with provisional solution A' as an initial solution to obtain a further improved solution.

In a case where no solution is found through k' (< K) times of the exchange calculation, a constraint spread range along with exchange so far (set of work schedules the penalty value of each of which has increased through k' times of the exchange calculation) is derived and recursive search is performed with one of the work schedules as a starting work schedule (Step 3-4).

In the present method, one work schedule (starting work schedule) having a penalty value larger than zero is focused on to narrow down the range of search only to an exchange path with a starting point at the start node of the starting work schedule, thereby efficiently performing listing. Moreover, path depth-first search can be associated with improved-solution search by associating each exchange path with an exchange line (task line) and performing search in this range.

Thus, efficient and exhaustive improved-solution search can be performed by the present method. In a case where the evaluation value (penalty) of the entire plan is expressed by the sum of the penalty values of work schedules, the value of f(A) at exchange generation can be differentially updated and thus the present method can be performed fast.

Although the improved-solution search method based on K times of exchange is described above, various methods of local search are known, and thus other well-known methods such as simulated annealing, genetic algorithm, and large-volume local search may be used.

A specific example of the processing at Step 3 in FIG. 11 (processing of the flowchart in FIG. 14) will be described below.

It is assumed that the initial solution calculated by the initial plan creator 12 at Step 2 in FIG. 11 is as illustrated in FIG. 12 described above. In the example illustrated in FIG. 12, as described above, tasks 4 to 8 are allocatable to the first basic work schedule of early-morning work schedule h1, tasks 5 to 10 are allocatable to the first basic work schedule of day-task work schedule h2, and tasks 7 to 11 are allocatable to the first basic work schedule of overnight work schedule h3. Task 11 is allocated to work schedule h1, task 6 is allocated to work schedule h3, and a constraint is not satisfied, and thus solution update (improvement) is needed at Step 3 in FIG. 11. The following describes an example in which an improved solution is generated at Step 3 in FIG. 11.

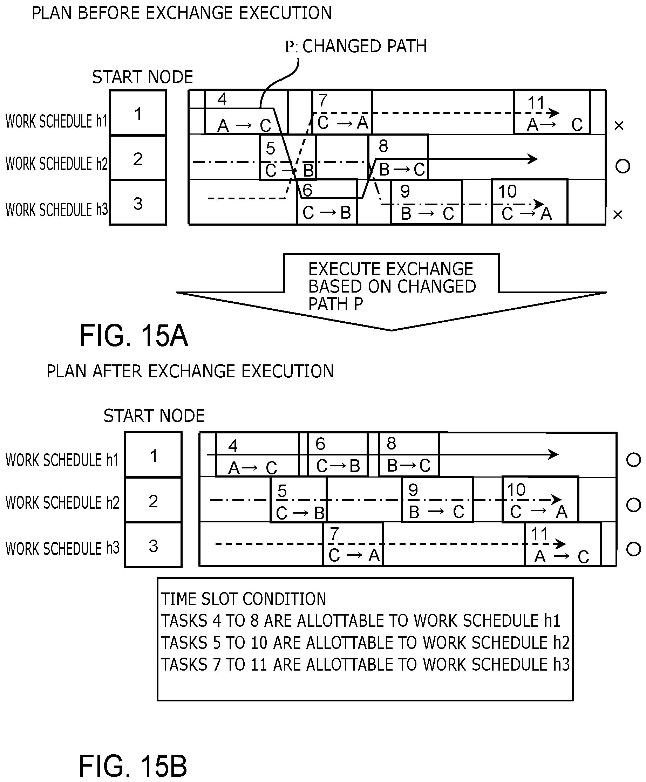

FIGS. 15A and 15B illustrate an example of backtracking search (exchange is performed two times) as a specific example of the processing at Step 3 in FIG. 11. FIG. 15A illustrates a plan (initial solution or provisional solution) before exchange is performed, and FIG. 15B illustrates a plan (improved solution or provisional solution) after exchange is performed. In the initial solution in FIG. 15A, a change path P (= 1→4→6→8) with a starting point at the start node (node 1) of work schedule h1 is considered. To perform this change path, two times of exchange calculations:

· Exchange calculation that changes connection of 4->7 of work schedule h1 and 3->6 of work schedule h3 to 4->6 and 3->7, respectively
· Exchange calculation that changes connection of 5->8 of work schedule h2 and 6->9 of work schedule h1 to 5->9 and 6->8, respectively, are performed. Through the two exchange calculations, the improved solution in FIG. 15B is obtained. In the plan (FIG. 15A) before exchange is performed, the time slot condition is not satisfied for work schedule h1 and work schedule h2, but in the plan (FIG. 15B) after exchange is performed, the time slot condition is satisfied for all work schedules.

Since the exchange calculation is performed to satisfy a connection constraint of an interchanged part, new constraint violation of a 1:1 condition, an earliest start time condition, a continuous task condition, and the like does not occur. Thus, it can be expected to obtain the improved solution by exhaustively searching plans in the range of K times of exchange.

Details of penalty calculation method by plan evaluator 14

The method of evaluation value calculation (method of calculating f(A) for plan A) performed at Step 3 in FIG. 11 will be described below. A penalty value is calculated for a task line allocated to a work schedule, and the penalty (evaluation value) of the entire plan can be calculated by the sum of the penalty values of individual work schedules. A penalty value is calculated in accordance with the degree of violation or the number of times of violation of constraints condition on a work schedule. Thus, the following description assumes constraint conditions related to a work schedule such as

- the lower limit of the number of basic work schedules is two,
- the upper limit of the length of each basic work schedule is two hours and 30 minutes
- the upper limit of the work schedule length is seven hours
- rest of 30 minutes or longer is needed in a meal time slot for the purpose of description.

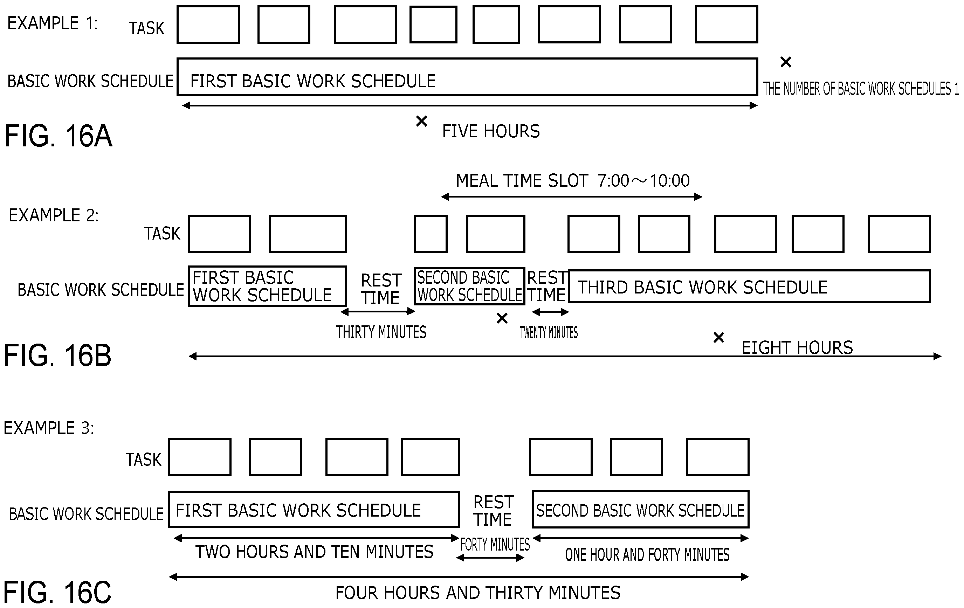

FIGS. 16A to 16C illustrate an example of constraint violation. FIG. 16A includes two constraint violations because the number of basic work schedules is one and lower than the lower limit value of two and the length of the basic work schedule is five hours and longer than the upper limit value of two hours and 30 minutes. In the diagram, a cross represents a constraint violation.

FIG. 16B includes two constraint violations because the number of basic work schedules is three and satisfies the condition that the lower limit value is two but the entire work schedule length is eight hours and longer than the lower limit value of seven hours, and a rest time is provided but a rest time in a meal time slot is 20 minutes and shorter than the lower limit value of 30 minutes.

In a case of constraint violation as in FIG. 16A or FIG. 16B, a penalty value calculated by M × the number of violations is applied to a work schedule to which the constraint violation has occurred, where M is an extremely large constant.

In FIG. 16C, the number of basic work schedules is two (two or more), the length of each basic work schedule is equal to or shorter than two hours and 30 minutes, the work schedule length is four hours and 30 minutes (equal to or shorter than seven hours), and a rest time in a meal time slot is 40 minutes (equal to or longer than 30 minutes), and accordingly, all constraints are satisfied. Thus, the penalty value is zero.

In the above-described example, a penalty value is calculated in accordance with the number of constraint violations on a premise that constraint conditions need to be always satisfied, but a penalty value may be calculated in accordance with the state of deviation from a constraint. For example, in a case where a target value is set, a penalty value may be calculated in accordance with the degree of deviation from the target value. In this manner, a penalty value can be calculated in accordance with constraint satisfaction situations such as the number of constraint violations and the degree of deviation.

For example, the following setting is assumed:

· Target value of the length of the first basic work schedule is two hours and 30 minutes
· Target value of a rest time in a meal time slot is 50 minutes In this case, the square of the difference from a target value may be calculated and set as a penalty value. For example, the length of the first basic work schedule of the work schedule illustrated in FIG. 16C is two hours and 10 minutes and its target value is two hours and 30 minutes, and accordingly, deviation is 20 minutes and a penalty value is 400 (= $20^2$). In addition, a meal time in the work schedule illustrated in FIG. 16C is 40 minutes and its target value is 50 minutes, and accordingly, deviation is 10 minutes and a penalty value is 100 (= $10^2$). Thus, the penalty value of the entire work schedule illustrated in FIG. 16C is calculated as 400 + 100 = 500. The basic work schedule length and the rest time are equally weighted in this example, but their weights may be changed and the evaluation value (penalty) of the entire work schedule may be calculated with the weighted sum of their penalty values. For example, the evaluation value (penalty) of the entire work schedule is calculated by 400*W1 + 100*W2, where W1 is the weight of the basic work schedule length and W2 is the weight of the rest time.

The above-described penalty value calculation method may be different among the early-morning, day task, and overnight work schedule types.

Third approach

In the first and second approaches, the outputting format of the work schedule plan 72 is a table format as in FIG. 9. In the third approach, another example of the outputting format of the work schedule plan 72 will be described.

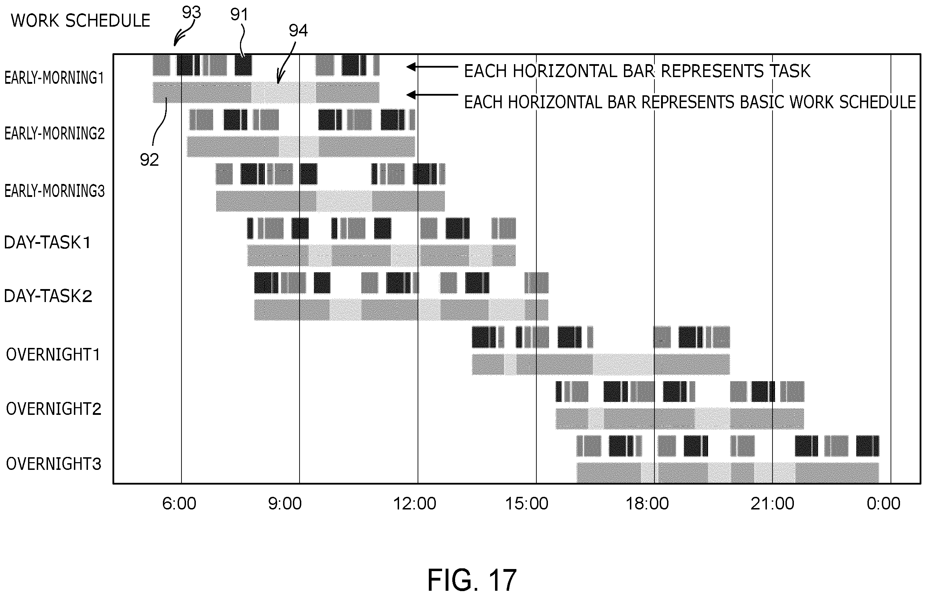

FIG. 17 illustrates an example in which the work schedule plan 72 is output in a Gantt chart format. In this example, the vertical axis represents work schedule, and the horizontal axis represents time. Information of each work schedule is expressed in two parts: horizontal bar 91 each representing a task are arranged in chronological order in the upper part, and horizontal bars 92 each representing a basic work schedule (a series of tasks) are arranged in chronological order in the lower part. The interval between horizontal bars 92 of basic work schedules corresponds to a rest time 94, and the interval between horizontal bars 91 in one basic work schedule corresponds to a task standby time 93.

A horizontal bar 91 corresponding to a task or a horizontal bar 92 corresponding to a basic work schedule may be noted with a start time, an end time, and a time length. Alternatively, the start time, the end time, and the time length may be popped up when a mouse cursor is placed over a horizontal bar 91 or a horizontal bar 92.

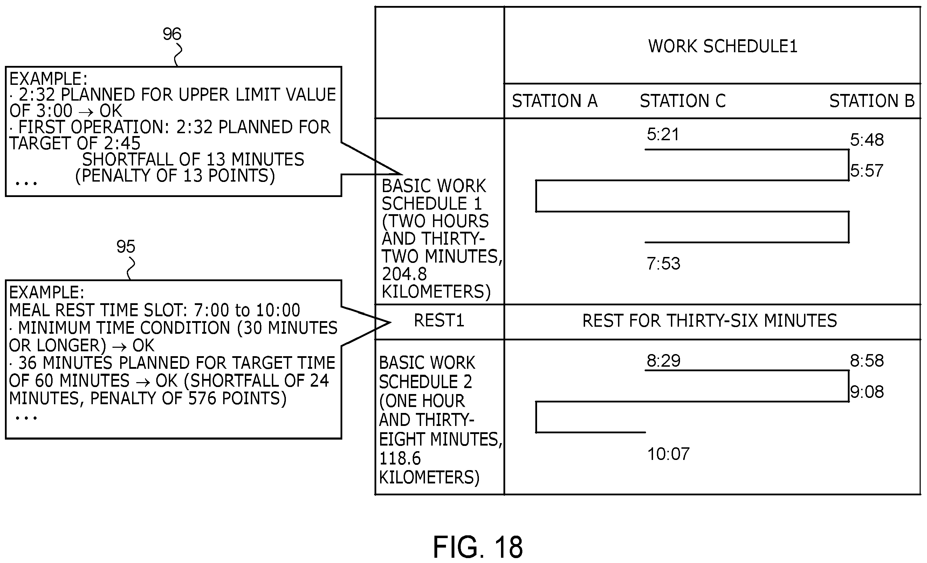

Moreover, each work schedule may be noted with the duty time, task kilometer (task distance), and the like of the work schedule. In addition, any constraint violation place in a provisional solution in a case where no solution that satisfies constraints is obtained, and any penalty applied part in a case where a solution that satisfies constraints is obtained may be noted. Alternatively, a constraint violation place in a provisional solution and the corresponding penalty applied part may be popped up (refer to FIG. 18 to be described later) when a mouse cursor is placed over a predetermined place (for example, a constraint violation place) on a screen. The present device 100 may include a detector configured to detect a cursor being placed over a predetermined place. To correct task allocation at a constraint violation place or a penalty applied part thus popped up, a user may add a constraint condition through an operation device and reflect the constraint condition as a constraint at work schedule plan creation.

FIG. 18 illustrates an example in which the work schedule plan 72 is output in a box timetable format.

In the box timetable format in FIG. 18, a work schedule is split into basic work schedules and a column between basic work schedules is defined as a rest time so that staff moving can be more effectively output.

In this case as well, any constraint violation place in a provisional solution in a case where no solution that satisfies constraints is obtained, or any penalty applied part (for example, the place of deviation from a target value) in a case where a solution that satisfies constraints is obtained may be noted. Alternatively, a constraint violation place in a provisional solution and a penalty applied part may be popped up when a mouse cursor is placed over a predetermined place on a screen. The present device 100 may include a detector configured to detect a cursor being placed over a predetermined place. To correct task allocation at a constraint violation place or a penalty applied part thus popped up, a user may add a constraint condition through an operation device and reflect the constraint condition as a constraint at work schedule plan creation.

FIG. 18 illustrates an example of a pop-up 95 displayed when a mouse cursor is placed over "rest 1" in a case where a meal rest time cannot be sufficiently provided. The pop-up 95 include information such as

"meal rest time slot: 7:00 to 10:00

· Minimum time condition (30 minutes or longer) -> OK
· 36 minutes planned for target time of 60 minutes -> OK (shortfall of 24 minutes, penalty of 576 points)"

The square of the difference from the target value is calculated as the penalty value.

FIG. 18 also illustrates an example of a pop-up 96 displayed when a mouse cursor is placed over "basic work schedule 1". In the pop-up 96, the difference from a target value is calculated as a penalty value.

In this manner, any constraint violation place or any large penalty value place is are reviewed for each work schedule in terms of basic work schedules at plan creation, and accordingly, an effect of visually easily understandable outputting is obtained.

Fourth approach

In the first approach and the second approach, a time in commercial operation is regarded as a task time and a duty time is calculated, but in a case where the duty time also includes various times of a preparation time, an organization time, and a shunting work time of depot inbound and outbound work of vehicles other than the commercial operation time, the duty time needs to be calculated with these times taken into account.

Since a task is defined as a fragment of a timetable, whether to start with depot outbound work and whether to end with depot inbound work are determined. In a case of a task that starts with depot outbound work, when starting a work schedule with the task, a staff needs to first perform depot outbound work from a depot. In a case where a task that starts with depot outbound work is allocated halfway through a work schedule, a staff needs to temporarily move by walking or the like from a station to a depot after the previous task and then perform depot outbound work from the depot before performing the task.

Similarly for depot inbound work, in a case of a task that ends with depot inbound work, when ending a work schedule with the task, a staff needs to last perform depot inbound work to a depot. In a case where a task that ends with depot inbound work is allocated halfway through a work schedule, a staff needs to perform depot inbound work to a depot and then return by walking or the like to a station from the depot before performing the next task.

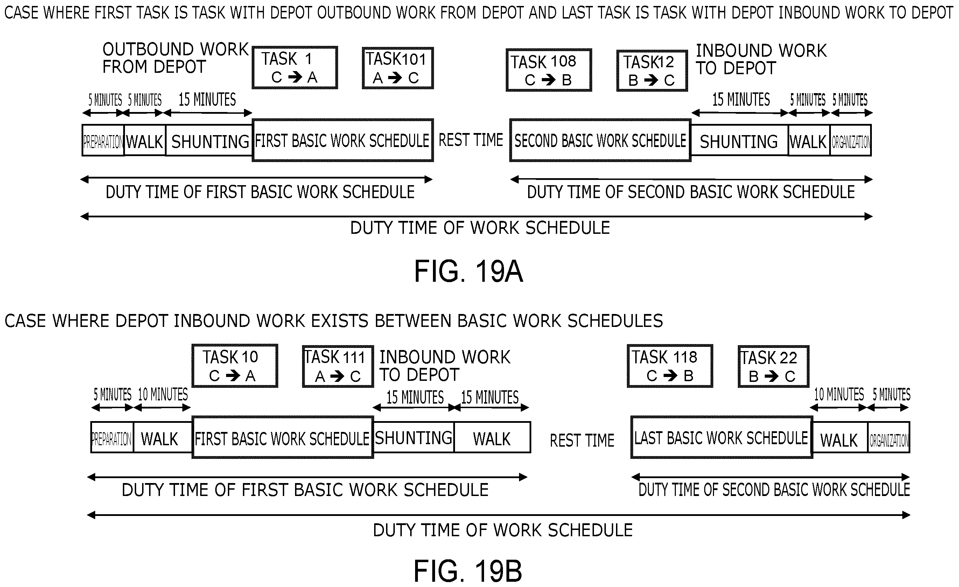

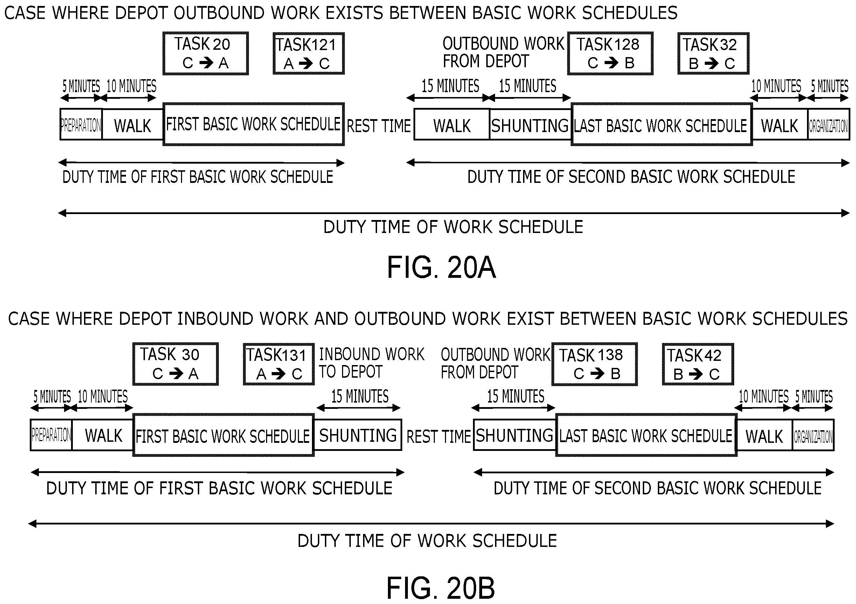

FIGS. 19A, 19B, 20A, and 20B illustrate examples. In these examples, a depot is located near station C, and a staff normally starts a duty (work schedule) at a depot office and ends a duty (work schedule) at the depot office.

FIG. 19A illustrates a case where the first task 1 is a task with depot outbound work from the depot and the last task 12 is a task with depot inbound work to the depot.

The first depot outbound work on the left side in FIG. 19A is considered first. The first task 1 departs at station C in notation, but only time widths related to commercial operation are indicated in this notation. In reality, task 1 is a task that starts commercial operation after depot outbound work of vehicles from the depot to station C. When the staff performs task 1 as the first task on the work schedule, the staff considers attendance at the depot office at first, and a total of 25 minutes of a preparation time (corresponding to preparation in 5 minutes on the leftmost side in FIG. 19A), a time for moving from the depot office to vehicles housed on a predetermined line at the depot by walking (corresponding to walk in 5 minutes on the leftmost side in FIG. 19A), and a time in which depot outbound work is performed after depot outbound work inspection of the vehicles and then the vehicles are moved to station C (corresponding to shunting in 15 minutes on the leftmost side in FIG. 19A) is needed before commercial operation.

In this case, it is thought that the time of 25 minutes in total, which is needed before commercial operation is included in the duty time of the first basic work schedule. Thus, it is thought that the time of 25 minutes is included in the duty time of the work schedule. Accordingly, in a case where the staff needs to perform preparation work, walk moving, and depot outbound work before performing the first task on the basic work schedule, the work schedule plan creator 10 (processor) in the above-described work schedule plan creation processing needs to allocate, to the same work schedule (target duration) as task fragment information indicating the first task, preparation work information including a duration in which the preparation work is performed, staff moving information including a duration in which the moving is performed, and shunting work information including a duration in which shunting work (depot outbound work) is performed.

The last depot inbound work on the right side in FIG. 19A is considered next. The last task 12 arrives at station C in notation, but in reality, task 12 is a task that ends commercial operation at station C and then performs depot inbound work of vehicles from station C to the depot. In a case where the staff performs task 12 as the last task, the staff considers leaving from the depot office at last, and a total of 25 minutes of a time in which vehicles are moved from station C to a predetermined line at the depot and subjected to depot inbound inspection (corresponding to shunting in 15 minutes on the rightmost side in FIG. 19A), a time for moving from the predetermined line at the depot to the depot office by walking (corresponding to walk in 5 minutes on the rightmost side in FIG. 19A), and an organization time (corresponding to preparation in 5 minutes on the rightmost side in FIG. 19A) is needed after commercial operation.

In this case, it is thought that the time of 25 minutes in total, which is needed after commercial operation is included in the duty time of the second basic work schedule. Thus, it is thought that the time of 25 minutes is included in the duty time of the work schedule. Accordingly, in a case where the staff needs to perform depot inbound work, walk moving, and organization work after performing the last task on the basic work schedule, the work schedule plan creator 10 (processor) in the above-described work schedule plan creation processing needs to allocate, to the same work schedule (target duration) as task fragment information indicating the last task, shunting work information including a duration in which shunting work (depot inbound work) is performed, staff moving information including a duration in which moving is performed, and organization work information including a duration in which organization work is performed.

As described above, in a case where the first depot inbound work and the last depot outbound work time of a duty are taken into consideration, the duty time of a work schedule is longer than in the cases of the first and second approaches.

Note that, in a case where the first task departs at station C (without depot outbound work), as illustrated on the left side in FIG. 19B, a time needed before the first basic work schedule only includes two times of a preparation time and a time for moving from the depot office to station C by walking, and in this case, 15 minutes is added to the duty time of the first basic work schedule. Note that the time needed before the first basic work schedule only includes a preparation time or a time for moving from the depot office to station C by walking in some cases. Alternatively, the time needed before the first basic work schedule only includes a time for depot outbound work in some cases.

In a case where the last task arrives at station C, as illustrated on the right side in FIG. 19B, a time needed after the last basic work schedule only includes two times of a time for moving from station C to the depot office by walking and an organization time, and in this case, 15 minutes is added to the duty time of the last basic work schedule. Note that, the time needed after the last basic work schedule only includes a time for moving from station C to the depot office by walking or an organization time in some cases. Alternatively, the time needed after the last basic work schedule only includes a time for depot outbound work in some cases.

A case where depot inbound work exists between basic work schedules as illustrated in FIG. 19B is considered next. Assume that the last task 111 on the first basic work schedule is a task that performs depot inbound work to the depot. In this case, a time needed after the first basic work schedule only includes two times of a time (shunting time; in this case, 15 minutes) in which vehicles are moved from station C to a predetermined line at the depot and subjected to depot inbound inspection and a time (in this case, 15 minutes) for moving from the predetermined line at the depot to station C by walking, and in this case, 30 minutes is added to the duty time of the first basic work schedule. Note that a walk time may be split into a time of walk from the predetermined line at the depot to the depot office and a time of walk from the depot office to station C, and in this case, the latter may be included in the duty time of the second basic work schedule.

Similarly, a case where depot outbound work exists between basic work schedules as illustrated in FIG. 20A is considered. Assume that the first task 128 on the second basic work schedule is a task that performs depot outbound work from the depot. In this case, a time needed before the second basic work schedule includes two times of a time (in this case, 15 minutes) for moving from station C to a predetermined line at the depot by walking and a time (shunting time; in this case, 15 minutes) in which vehicles are moved from the predetermined line at the depot to station C after depot outbound work inspection, and in this case, 30 minutes is added to the duty time of the last basic work schedule. Note that a walk time may be split into a time of walk from station C to the depot office and a time of walk from the depot office to the predetermined line at the depot, and in this case, the former may be included in the duty time of the first basic work schedule.

In a case where depot inbound work, depot outbound work, or the like exists between basic work schedules as described above, a rest time between basic work schedules is shorter than in the cases of the first and second approaches. Specifically, in a case where the duration between basic work schedules includes a duration in which shunting work (depot inbound work or depot outbound work) is performed and a duration in which the staff moves, the work schedule plan creator 10 (processor) sets, as a rest time, the remaining duration calculated by subtracting, from the duration between basic work schedules, the duration in which shunting work is performed and the duration in which the staff moves. In this example, shunting work and the moving duration both exist between basic work schedules, but only one of them exists in some cases.

However, such task connection is not appreciated in some cases since an unnecessary walk time is added, and such a case can be handled by providing penalty in a case where the two tasks are continuous and reflecting the penalty to an evaluation function.

Lastly, a case where depot inbound work and depot outbound work both exist between basic work schedules as illustrated in FIG. 20B is considered as a case where depot inbound and outbound work is continuous. Assume that the last task 131 on the first basic work schedule is a task that performs depot inbound work to the depot (vehicles in this case are referred to as vehicles "a") and the first task 138 on the second basic work schedule is a task that performs depot outbound work from the depot (vehicles in this case are referred to as vehicles "b"). In this case, a time needed after the first basic work schedule and before the second basic work schedule only includes two times of a time (shunting time; in this case, 15 minutes) in which vehicles "a" are moved from station C to a predetermined line at the depot and subjected to depot inbound inspection and a time (shunting time; in this case, 15 minutes) in which vehicles "b" are moved from the predetermined line at the depot to station C after depot outbound inspection, and no walk time is needed when moving from a depot inbound line of vehicles "a" to a depot outbound line of vehicles "b" is regarded as 0 minute. In this case, 15 minutes is added to each of the duty time of the first basic work schedule and the duty time of the last basic work schedule. Note that a time for moving between lines or a round-trip time from a predetermined line to the depot office may be added as a walk time.

Such task connection is appreciated in some cases since an unnecessary walk time as in FIGS. 19B and 20A does not occur. In such a case, negative penalty may be provided to the task connection so that the connection is more likely to appear.

In a case where a duty time includes times of attendance and leaving and times related to depot inbound work and depot outbound work as described above, only an evaluation function calculation method is different as compared to the work schedule plan creation methods in the first and second approaches. Specifically, as described above, the duty time of a basic work schedule, a rest time, and the duty time of a work schedule can be uniquely calculated once task allocation to the work schedule is determined. Note that conditions such as the upper limit value of the duty time of a basic work schedule may be applied to the duty time of a basic work schedule, which is determined in the first and second approaches, or may be applied to the new duty time of a basic work schedule, which is determined in the fourth approach, in accordance with rules of a railway business operator.

Processing corresponding to the flowchart in FIG. 11 is the same as in the first and second approaches except for the evaluation function calculation method, and thus description of the other processing is omitted.

Note that, in the fourth approach, the following evaluation items related to depot inbound and outbound work may be newly applied in addition to the evaluation items in the first and second approaches.

- Depot inbound and outbound work is not to be performed on a day-task work schedule
- Depot inbound and outbound work between basic work schedules is to be avoided as much as possible
- A case where depot inbound work and depot outbound work both exist between basic work schedules is not needed to be avoided
- Depot outbound work is to be performed at a particular task as much as possible after depot inbound work at a task

Note that, in the fourth approach, inputs related to a preparation time, an organization time, a shunting time, a walk time, and the like need to be provided to calculate the above-described calculation rules of a duty time and a rest time.

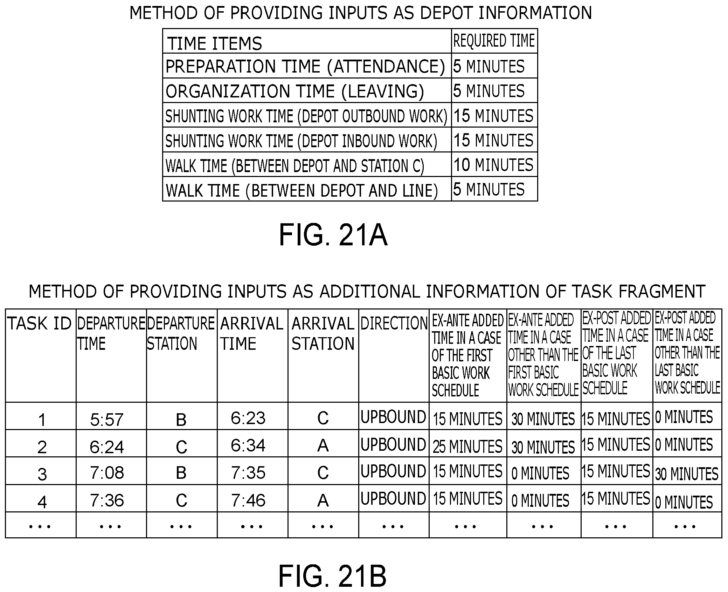

FIG. 21A is an example in which these values are defined as required-time information defined for each depot. In this example, data that a preparation time (attendance) and an organization time (leaving) are five minutes and shunting work (depot outbound work) is 15 minutes is provided for each item.

Another method of providing inputs may be a method of providing, for example, "ex-ante added time in a case of the first basic work schedule", "ex-ante added time in a case other than the first basic work schedule", "ex-post added time in a case of the last basic work schedule", and "ex-post added time in a case other than the last basic work schedule" as inputs of additional information to each task fragment as illustrated in FIG. 21B. For example, tasks ID1 and ID2 are tasks with depot outbound work and ID3 is a task with depot inbound work. In this case, as for tasks ID1 and ID2, calculated values of a preparation time, a shunting work time, and a walk time that are needed at depot outbound work are provided as an added time for each of "case of the first basic work schedule" and "case other than the first basic work schedule". As for task ID3, calculated values of an organization time, a shunting work time, and a walk time that are needed at depot inbound work are provided as an added time for each of "case of the last basic work schedule" and "case other than the last basic work schedule". As for a task without depot inbound work nor depot outbound work like task ID4, only a preparation time in a case of the first basic work schedule and an organization time in a case of the last basic work schedule are counted as an added time, and thus a relatively small value is set. Note that, in the table in FIG. 21B, four kinds of added-time values are all defined for each task, but only some of the added-time values may be defined. For example, in a case where task ID1 is the first task on the first train, the task is not allocated to a basic work schedule other than the first basic work schedule and thus, for example, the value of "ex-ante added time in a case other than the first basic work schedule" does not necessarily need to be defined.

Note that, when the above-described format of "ex-ante added time in a case of the first basic work schedule" additionally defined for a task fragment is used, for example, the value of a case where a necessary task exists first in the task can be added, whereas a case of depot inbound and outbound work is not a limiting example. For example, in a case of a free ride on a train different from that of a task before the task is performed, a time taken for the free ride may be added to "added time in a case of the first basic work schedule". In the opposite case of a free ride on a train different from that of a task after the task is performed, a time taken for the free ride may be added to "ex-post added time in a case of the last basic work schedule".

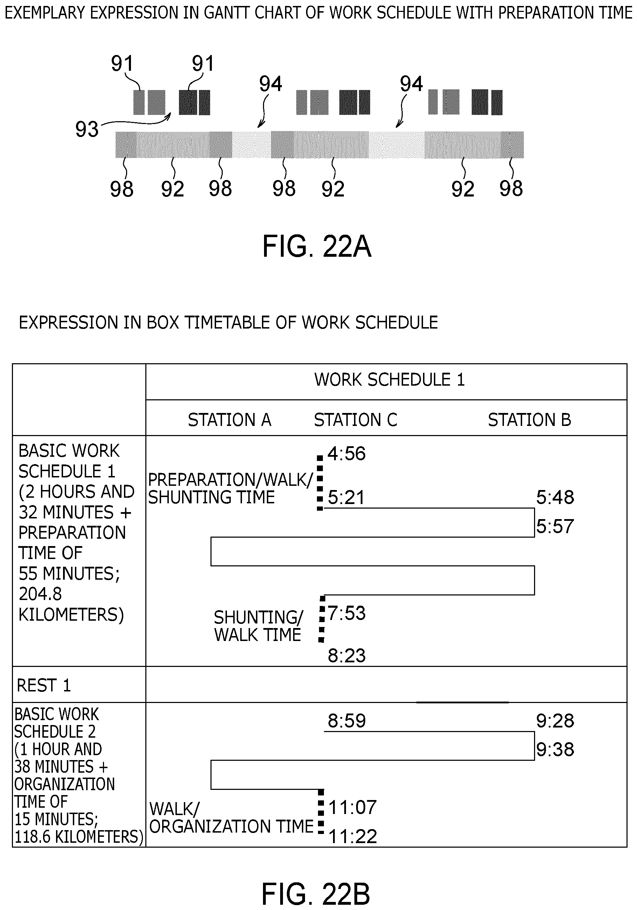

When results of the fourth approach are output, for example, a preparation time, an organization time, and a shunting time may be explicitly output as illustrated in FIGS. 22A and 22B. FIG. 22A is the Gantt chart illustrated in FIG. 17, which is extended so that, for example, a preparation time, an organization time, and a shunting time are explicitly output. In this case, it is the same as in the first and second approaches that each upper horizontal bar represents an individual task and each lower horizontal bar represents a basic work schedule or a rest, but it is different from the first and second approaches that a time 98 such as a preparation time, an organization time, or a shunting time is added to a lower horizontal bar. This notation has an effect of explicitly expressing increase in a duty time due to depot inbound work before the first basic work schedule or depot outbound work after the last basic work schedule. Moreover, since depot inbound and outbound work between basic work schedules halfway through a work schedule is explicitly expressed, an effect of explicitly expressing decrease in a rest time between basic work schedules is obtained.

FIG. 22B is the box timetable illustrated in FIG. 18, which is extended so that, for example, a preparation time, an organization time, and a shunting time are explicitly output. This case is characterized such that a preparation or organization time, a walk time (moving time), and a shunting time are expressed first and last with vertical dotted lines in addition to basic expression of the box timetable. This notation has an effect of explicitly expressing increase in a duty time due to depot inbound work before the first basic work schedule or depot outbound work after the last basic work schedule. Moreover, since depot inbound and outbound work between basic work schedules halfway through a work schedule is explicitly expressed, an effect of explicitly expressing decrease in a rest time between basic work schedules is obtained.

(Hardware configuration)

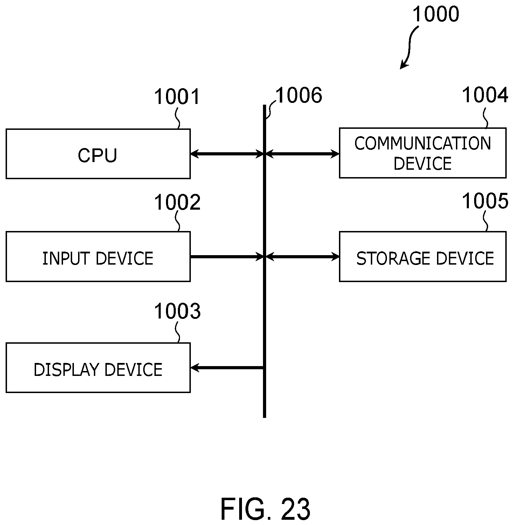

A hardware configuration of the schedule creation apparatus according to the above approaches will be described with reference to FIG. 23.

FIG. 23 shows a hardware configuration of the schedule creation apparatus, which is an information processing apparatus according to the approaches. As shown in FIG. 24, the schedule creation apparatus according to the approaches of the present invention is made up of a computer 1000. The computer 1000 includes a CPU 1001 (central processing unit), input devices 1002, a display device 1003, a communications device 1004, and a storage device 1005, which are interconnected via a bus 1006.

The CPU 1001 is a control unit and arithmetic unit of the computer 1000. The CPU 1001 performs computational processes based on data and programs received as input from various devices (e.g., the input devices 1002, the communications device 1004, and the storage device 1005) connected via the bus 1006 and outputs computational results and control signals to various devices (e.g., the display device 1003, the communications device 1004, and the storage device 1005) connected via the bus 1006.

Specifically, the CPU 1001 executes an OS (operating system) of the computer 1000, a plan creation program (information processing program), and the like and controls various devices making up the computer 1000. The plan creation program makes the computer 1000 implement the above-mentioned functional components of the schedule creation apparatus. As the CPU 1001 executes the plan creation program, the computer 1000 functions as the schedule creation apparatus.

The input devices 1002 are used to enter information to the computer 1000. The input devices 1002 are, for example, a keyboard, a mouse, and/or a touch panel, but are not limited thereto. The input devices 1002 allow the user to enter input information.

The display device 1003 is used to display images and videos. The display device 1003 is, for example, an LCD (liquid crystal display), a CRT (cathode ray tube), or a PDP (plasma display panel), but is not limited thereto. The user can display optimization results on the display device 1003.

The communications device 1004 allows the computer 1000 to communicate with an external device by radio or by wire. The communications device 1004 includes a modem, a hub, and a router, but is not limited thereto. The input information may be sent from the external device via the communications device 1004.

The storage device 1005 is a storage medium configured to store the OS of the computer 1000, the plan creation program, data necessary for execution of the plan creation program, and data generated by the execution of the plan creation program. The storage device 1005 includes a main storage device and external storage devices. The main storage device is, for example, RAM, DRAM, or SRAM, but is not limited thereto. The external storage devices are a hard disk, an optical disk, a flash memory, and a magnetic tape, but are not limited thereto.

Note that the computer 1000 may include one or more of the CPU 1001, the input devices 1002, the display device 1003, the communications device 1004, and the storage device 1005, and may be connected with a peripheral such as a printer or a scanner. The schedule creation apparatus may be made up of the single computer 1000 or may be configured as a system made up of a plurality of the computers 1000 connected with one another.

Furthermore, the plan creation program may be prestored in the storage device 1005 of the computer 1000, stored in a storage medium such as a CD-ROM, or uploaded to the Internet. In any case, when executed by being installed on the computer 1000, the plan creation program can make up the schedule creation apparatus.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

The approaches as described before may be configured as below.

(Clauses)

Clause 1. An information processing device comprising a processor configured to:

acquire one or more pieces of train line information each including a plurality of stop positions of a train and at least one of departure and arrival times at each of the plurality of stop positions;

split the one or more pieces of train line information into a plurality of parts based on replacement stop positions, among the stop positions, at which a task for working on the train can switch between staffs, to obtain a plurality of pieces of task fragment information each indicating a task of a staff corresponding to each split train line part; and allocate each of the plurality of pieces of task fragment information to any of a plurality of target durations to create a plurality of work schedules indicating a schedule of tasks for each of the target durations, wherein a series of the tasks continuously allocated in each of the work schedules corresponds to a basic work schedule, each of the work schedules includes one or more basic work schedule and the processor is configured to perform allocation of the plurality of pieces of task fragment information based on a constraint related to the basic work schedule.

Clause 2. The information processing device according to clause 1, wherein the constraint related to the basic work schedule includes a constraint related to the number of basic work schedules included in each of the work schedules.

Clause 3. The information processing device according to clause 2, wherein the constraint related to the basic work schedule includes a constraint related to a time required to be allowed between the basic work schedules included in each of the work schedules.

Clause 4. The information processing device according to clause 3, wherein

the staff's continuously working of the plurality of tasks means that difference between an arrival time indicated by one piece of the task fragment information and a departure time of another piece of the task fragment information disposed next to the one piece of the task fragment information in chronological order is shorter than a threshold value, and

the time required to be allowed between the basic work schedules is equal to or longer than the threshold value.

Clause 5. The information processing device according to any one of clauses 1 to 4, wherein the constraint related to the basic work schedule includes a constraint related to a lower limit value, upper limit value, or target value of a duration of the basic work schedule.

Clause 6. The information processing device according to any one of clauses 1 to 5, wherein the constraint related to the basic work schedule includes a constraint related to a lower limit value, upper limit value, or target value of a task distance being a distance by which the staff moves correspondingly to the basic work schedule.

Clause 7. The information processing device according to any one of clauses 1 to 6, wherein

each of the plurality of work schedules has a work schedule type in accordance with a time slot to which the work schedule belongs,

at least two of the plurality of work schedules have work schedule types different from each other, and the constraint related to the basic work schedule is different among the work schedule types.

Clause 8. The information processing device according to clause 3 or 4, wherein

the time required to be allowed between the basic work schedules is rest time, and the constraint related to the basic work schedule includes a constraint related to a lower limit value, maximum value, or target value of the rest time.

Clause 9. The information processing device according to clause 5, wherein the constraint related to the basic work schedule includes a constraint related to the lower limit value, upper limit value, or target value of the basic duration of the basic work schedule only for a particular basic work schedule among one or more basic work schedules included in each of the work schedules.

Clause 10. The information processing device according to clause 6, wherein the constraint related to the basic work schedule includes a constraint related to the lower limit value, upper limit value, or target value of the task distance of the basic work schedule only for a particular basic work schedule among one or more basic work schedules included in each of the work schedules.

Clause 11. The information processing device according to clause 5, wherein the constraint related to the basic work schedule includes

a constraint related to the lower limit value, upper limit value, or target value of the duration of a first basic work schedule included in each of the work schedules, the constraint including a preparation time for a first task on the first basic work schedule, or

a constraint related to the lower limit value, upper limit value, or target value of the duration of a last basic work schedule included in each of the work schedules, the constraint including an organizing time after a last task on the last basic work schedule.

Clause 12. The information processing device according to any one of clauses 1 to 11,

wherein the constraint related to the basic work schedule includes

a constraint related to the lower limit value, upper limit value, or target value of the task distance of a first basic work schedule included in each of the work schedules, the constraint including moving of a staff for preparation for a first task on the first basic work schedule, or

a constraint related to the lower limit value, upper limit value, or target value of the task distance of a last basic work schedule included in each of the work schedules, the constraint including moving of a staff for organization after a last task on the last basic work schedule.

Clause 13. The information processing device according to any one of clauses 1 to 12, wherein the processor creates the plurality of work schedules by recursively repeating generation of a provisional solution that allocates each of the plurality of pieces of task fragment information to any of the plurality of target durations, calculation of an evaluation value of the provisional solution based on the constraint related to the basic work schedule, and update of the provisional solution to improve the evaluation value of the provisional solution.

Clause 14. The information processing device according to clause 13, wherein the processor calculates the evaluation value of the provisional solution based on a number of work schedules for which the constraint is not satisfied in the provisional solution.

Clause 15. The information processing device according to clause 13 or 14, wherein

the constraint related to the basic work schedule includes a constraint related to a lower limit value, upper limit value, or target value of at least one of a duration of the basic work schedule, a time required to be allowed between basic work schedules, and a task distance, and

the processor calculates the evaluation value of the provisional solution based on a deviation amount of the provisional solution from the lower limit value, the upper limit value, or the target value for work schedules in the provisional solution.

Clause 16. The information processing device according to any one of clauses 1 to 15, further comprising an outputter configured to output information of the plurality of work schedules in a Gantt chart format in which the information is divided into a column of the basic work schedules and a column of the tasks for each of the work schedules.

Clause 17. The information processing device according to clause 16, wherein the outputter outputs information including contents of constraint violation to a screen when a cursor by a user operation is placed over a display place of a basic work schedule violating the constraint.

Clause 18. The information processing device according to any one of clauses 1 to 16, further comprising an outputter configured to output information of the plurality of work schedules in a box timetable format in which the information is divided into the basic work schedules and any rest time that is a time interval between the basic work schedules for each of the work schedules.

Clause 19. The information processing device according to clause 18, wherein the outputter outputs information including contents of constraint violation to a screen when a cursor by a user operation is placed over a display place of a basic work schedule violating the constraint or the rest time.

Clause 20. The information processing device according to any one of clauses 1 to 19, wherein

the processor generates a plurality of patterns each including a plurality of work schedule candidates in which each of the plurality of pieces of task fragment information is allocated to each of the plurality of target durations, and

the processor generates an evaluation function including variables and penalty values, the variable expressing, with "0" or "1", whether to select each of the work schedule candidates of the plurality of patterns for each of the plurality of target durations, and the penalty value being a value depending on a satisfaction situation of the constraint in a case where the work schedule candidate corresponding to the variable is selected, the evaluation function being defining a sum of multiplied values of the variables by the penalty values,

the processor determines values of the variables so that the evaluation function is minimized or quasi- minimized, and the processor creates the plurality of work schedules based on the value of the variable.

Clause 21. The information processing device according to any one of clauses 1 to 20, wherein in a case where shunting work of the train needs to be performed by the staff before a first task in the basic work schedule is performed or after a last task in the basic work schedule, the processor allocates shunting work information including a duration for performing the shunting work to the same target duration as the task fragment information indicating the first task or the last task.

Clause 22. The information processing device according to any one of clauses 1 to 20 wherein in a case where the staff needs to move, before performing a first task or after performing a last task in the basic work schedule, to a start position of the first task or from an end position of the last task, the processor allocates staff moving information including a duration for performing moving to the first position or from the end position to the same target duration as the task fragment information indicating the first task or the last task.

Clause 23. The information processing device according to any one of clauses 1 to 20, wherein in a case where preparation work is necessary before performing a first task in the basic work schedule or organization work of the task is necessary after performing a last task in the basic work schedule, the processor allocates preparation work information or organization work information including a duration for performing the preparation work or the organization work to the same target duration as the task fragment information indicating the first task or the last task.

Clause 24. The information processing device according to clause 21, wherein

the constraint related to the basic work schedule includes a constraint related to a rest time as a time required to be allowed between the basic work schedules included in the work schedule, and

in a case where the duration for performing the shunting work is included in a duration between the basic work schedules, the processor calculates the rest time by subtracting the duration for performing the shunting work from the duration between the basic work schedules.

Clause 25. The information processing device according to clause 22, wherein

the constraint related to the basic work schedule includes a constraint related to a rest time as a time required to be allowed between the basic work schedules included in the work schedule, and

in a case where the duration of the staff's moving is included in a duration between the basic work schedules, the processor calculates the rest time by subtracting the duration of the staff's moving from the duration between the basic work schedules.

Clause 26. An information processing method, comprising:

acquiring one or more pieces of train line information each including a plurality of stop positions of a train and at least one of departure and arrival times at each of the plurality of stop positions;

splitting the one or more pieces of train line information into a plurality of parts based on replacement stop positions, among the stop positions, at which a task for working on the train can switch between staffs, to obtain a plurality of pieces of task fragment information each indicating a task of a staff corresponding to each split train line part; and

allocating each of the plurality of pieces of task fragment information to any of a plurality of target durations to create a plurality of work schedules indicating a schedule of tasks for each of the target durations,

wherein a series of the tasks continuously allocated in each of the work schedules corresponds to a basic work schedule,

each of the work schedules includes one or more basic work schedule and

the method comprises performing allocation of the plurality of pieces of task fragment information based on a constraint related to the basic work schedule.

Clause 27. A non-transitory computer readable medium having a computer program stored therein which causes a computer to perform processes, comprising:

acquiring one or more pieces of train line information each including a plurality of stop positions of a train and at least one of departure and arrival times at each of the plurality of stop positions;

splitting the one or more pieces of train line information into a plurality of parts based on replacement stop positions, among the stop positions, at which a task for working on the train can switch between staffs, to obtain a plurality of pieces of task fragment information each indicating a task of a staff corresponding to each split train line part; and

allocating each of the plurality of pieces of task fragment information to any of a plurality of target durations to create a plurality of work schedules indicating a schedule of tasks for each of the target durations,

wherein a series of the tasks continuously allocated in each of the work schedules corresponds to a basic work schedule,

each of the work schedules includes one or more basic work schedule and

the method comprises performing allocation of the plurality of pieces of task fragment information based on a constraint related to the basic work schedule.

**Claims**

1. An information processing device comprising a processor configured to:

   acquire one or more pieces of train line information each including a plurality of stop positions of a train and at least one of departure and arrival times at each of the plurality of stop positions;

   split the one or more pieces of train line information into a plurality of parts based on replacement stop positions, among the stop positions, at which a task for working on the train can switch between staffs, to obtain a plurality of pieces of task fragment information each indicating a task of a staff corresponding to each split train line part; and

   allocate each of the plurality of pieces of task fragment information to any of a plurality of target durations to create a plurality of work schedules indicating a schedule of tasks for each of the target durations, wherein a series of the tasks continuously allocated in each of the work schedules corresponds to a basic work schedule, each of the work schedules includes one or more basic work schedule and the processor is configured to perform allocation of the plurality of pieces of task fragment information based on a constraint related to the basic work schedule.

2. The information processing device according to claim 1, wherein the constraint related to the basic work schedule includes a constraint related to the number of basic work schedules included in each of the work schedules.

3. The information processing device according to claim 2, wherein the constraint related to the basic work schedule includes a constraint related to a time required to be allowed between the basic work schedules included in each of the work schedules.

4. The information processing device according to claim 3, wherein

   the staff's continuously working of the plurality of tasks means that difference between an arrival time indicated by one piece of the task fragment information and a departure time of another piece of the task fragment information disposed next to the one piece of the task fragment information in chronological order is shorter than a threshold value, and

   the time required to be allowed between the basic work schedules is equal to or longer than the threshold value.

5. The information processing device according to any one of claims 1 to 4, wherein the constraint related to the basic work schedule includes a constraint related to a lower limit value, upper limit value, or target value of a duration of the basic work schedule.

6. The information processing device according to any one of claims 1 to 5, wherein the constraint related to the basic work schedule includes a constraint related to a lower limit value, upper limit value, or target value of a task distance being a distance by which the staff moves correspondingly to the basic work schedule.

7. The information processing device according to any one of claims 1 to 6, wherein

each of the plurality of work schedules has a work schedule type in accordance with a time slot to which the work schedule belongs,
at least two of the plurality of work schedules have work schedule types different from each other, and
the constraint related to the basic work schedule is different among the work schedule types.

8. The information processing device according to claim 3 or 4, wherein

the time required to be allowed between the basic work schedules is rest time, and
the constraint related to the basic work schedule includes a constraint related to a lower limit value, maximum value, or target value of the rest time.

9. The information processing device according to claim 5, wherein the constraint related to the basic work schedule includes a constraint related to the lower limit value, upper limit value, or target value of the basic duration of the basic work schedule only for a particular basic work schedule among one or more basic work schedules included in each of the work schedules.

10. The information processing device according to claim 6, wherein the constraint related to the basic work schedule includes a constraint related to the lower limit value, upper limit value, or target value of the task distance of the basic work schedule only for a particular basic work schedule among one or more basic work schedules included in each of the work schedules.

11. The information processing device according to claim 5, wherein the constraint related to the basic work schedule includes

a constraint related to the lower limit value, upper limit value, or target value of the duration of a first basic work schedule included in each of the work schedules, the constraint including a preparation time for a first task on the first basic work schedule, or
a constraint related to the lower limit value, upper limit value, or target value of the duration of a last basic work schedule included in each of the work schedules, the constraint including an organizing time after a last task on the last basic work schedule.

12. The information processing device according to claim 6, wherein the constraint related to the basic work schedule includes

a constraint related to the lower limit value, upper limit value, or target value of the task distance of a first basic work schedule included in each of the work schedules, the constraint including moving of a staff for preparation for a first task on the first basic work schedule, or
a constraint related to the lower limit value, upper limit value, or target value of the task distance of a last basic work schedule included in each of the work schedules, the constraint including moving of a staff for organization after a last task on the last basic work schedule.

13. The information processing device according to any one of claims 1 to 12, wherein the processor creates the plurality of work schedules by recursively repeating generation of a provisional solution that allocates each of the plurality of pieces of task fragment information to any of the plurality of target durations, calculation of an evaluation value of the provisional solution based on the constraint related to the basic work schedule, and update of the provisional solution to improve the evaluation value of the provisional solution.

14. The information processing device according to claim 13, wherein the processor calculates the evaluation value of the provisional solution based on a number of work schedules for which the constraint is not satisfied in the provisional solution.

15. The information processing device according to claim 13 or 14, wherein

the constraint related to the basic work schedule includes a constraint related to a lower limit value, upper limit value, or target value of at least one of a duration of the basic work schedule, a time required to be allowed between basic work schedules, and a task distance, and

the processor calculates the evaluation value of the provisional solution based on a deviation amount of the provisional solution from the lower limit value, the upper limit value, or the target value for work schedules in the provisional solution.

16. The information processing device according to any one of claims 1 to 15, further comprising an outputter configured to output information of the plurality of work schedules in a Gantt chart format in which the information is divided into a column of the basic work schedules and a column of the tasks for each of the work schedules.

17. The information processing device according to claim 16, wherein the outputter outputs information including contents of constraint violation to a screen when a cursor by a user operation is placed over a display place of a basic work schedule violating the constraint.

18. The information processing device according to any one of claims 1 to 16, further comprising outputter configured to output information of the plurality of work schedules in a box timetable format in which the information is divided into the basic work schedules and any rest time that is a time interval between the basic work schedules for each of the work schedules.

19. The information processing device according to claim 18, wherein the outputter outputs information including contents of constraint violation to a screen when a cursor by a user operation is placed over a display place of a basic work schedule violating the constraint or the rest time.

20. The information processing device according to any one of claims 1 to 19, wherein

the processor generates a plurality of patterns each including a plurality of work schedule candidates in which each of the plurality of pieces of task fragment information is allocated to each of the plurality of target durations, and
the processor generates an evaluation function including variables and penalty values, the variable expressing, with "0" or "1", whether to select each of the work schedule candidates of the plurality of patterns for each of the plurality of target durations, and the penalty value being a value depending on a satisfaction situation of the constraint in a case where the work schedule candidate corresponding to the variable is selected, the evaluation function being defining a sum of multiplied values of the variables by the penalty values,
the processor determines values of the variables so that the evaluation function is minimized or quasi- minimized, and the processor creates the plurality of work schedules based on the value of the variable.

21. The information processing device according to any one of claims 1 to 20, wherein in a case where shunting work of the train needs to be performed by the staff before a first task in the basic work schedule is performed or after a last task in the basic work schedule, the processor allocates shunting work information including a duration for performing the shunting work to the same target duration as the task fragment information indicating the first task or the last task.

22. The information processing device according to any one of claims 1 to 20, wherein in a case where the staff needs to move, before performing a first task or after performing a last task in the basic work schedule, to a start position of the first task or from an end position of the last task, the processor allocates staff moving information including a duration for performing moving to the first position or from the end position to the same target duration as the task fragment information indicating the first task or the last task.

23. The information processing device according to any one of claims 1 to 20, wherein in a case where preparation work is necessary before performing a first task in the basic work schedule or organization work of the task is necessary after performing a last task in the basic work schedule, the processor allocates preparation work information or organization work information including a duration for performing the preparation work or the organization work to the same target duration as the task fragment information indicating the first task or the last task.

24. The information processing device according to claim 21, wherein

the constraint related to the basic work schedule includes a constraint related to a rest time as a time required to be allowed between the basic work schedules included in the work schedule, and
in a case where the duration for performing the shunting work is included in a duration between the basic work schedules, the processor calculates the rest time by subtracting the duration for performing the shunting work from the duration between the basic work schedules.

**25.** The information processing device according to claim 22, wherein

the constraint related to the basic work schedule includes a constraint related to a rest time as a time required to be allowed between the basic work schedules included in the work schedule, and

in a case where the duration of the staff's moving is included in a duration between the basic work schedules, the processor calculates the rest time by subtracting the duration of the staff's moving from the duration between the basic work schedules.

**26.** An information processing method, comprising:

acquiring one or more pieces of train line information each including a plurality of stop positions of a train and at least one of departure and arrival times at each of the plurality of stop positions;

splitting the one or more pieces of train line information into a plurality of parts based on replacement stop positions, among the stop positions, at which a task for working on the train can switch between staffs, to obtain a plurality of pieces of task fragment information each indicating a task of a staff corresponding to each split train line part; and

allocating each of the plurality of pieces of task fragment information to any of a plurality of target durations to create a plurality of work schedules indicating a schedule of tasks for each of the target durations,

wherein a series of the tasks continuously allocated in each of the work schedules corresponds to a basic work schedule,

each of the work schedules includes one or more basic work schedule and

the method comprises performing allocation of the plurality of pieces of task fragment information based on a constraint related to the basic work schedule.

**27.** A computer program stored therein which causes a computer to perform processes, comprising:

acquiring one or more pieces of train line information each including a plurality of stop positions of a train and at least one of departure and arrival times at each of the plurality of stop positions;

splitting the one or more pieces of train line information into a plurality of parts based on replacement stop positions, among the stop positions, at which a task for working on the train can switch between staffs, to obtain a plurality of pieces of task fragment information each indicating a task of a staff corresponding to each split train line part; and

allocating each of the plurality of pieces of task fragment information to any of a plurality of target durations to create a plurality of work schedules indicating a schedule of tasks for each of the target durations,

wherein a series of the tasks continuously allocated in each of the work schedules corresponds to a basic work schedule,

each of the work schedules includes one or more basic work schedule and

the method comprises performing allocation of the plurality of pieces of task fragment information based on a constraint related to the basic work schedule.

FIG. 1

TASK STANDBY TIME

(THRESHOLD≦)

TWO MINUTES   FIVE MINUTES    TWO MINUTES    20 MINUTES     TWO MINUTES   FIVE MINUTES

| TASK 1<br>C →A | TASK 101<br>A →C | TASK102<br>C →B | TASK6<br>B →C | | TASK 108<br>C →B | TASK 12<br>B →C | TASK13<br>C →A |

PREPARATION TIME | FIRST BASIC WORK SCHEDULE | REST TIME | SECOND BASIC WORK SCHEDULE | REST TIME

←————————— DUTY TIME OF BASIC WORK SCHEDULE —————————→

←————————————————— DUTY TIME OF WORK SCHEDULE —————————————————→

## FIG. 2

100

PLAN BASIC INFORMATION INPUTTER 21

PLAN BASIC INFORMATION STORAGE 30
· THE NUMBER OF WORK SCHEDULES FOR EACH WORK SCHEDULE TYPE (EARLY-MORNING WORK SCHEDULE, DAY-TASK WORK SCHEDULE, OR OVERNIGHT WORK SCHEDULE)
· TIME SLOT FOR EACH WORK SCHEDULE TYPE
· REPLACING POSSIBLE STATION INFORMATION

TIMETABLE INFORMATION INPUTTER 22

TIMETABLE INFORMATION STORAGE 40
· DEPARTURE TIME/PLACE AND ARRIVAL TIME/PLACE FOR EACH TRAIN LINE

BASIC WORK SCHEDULE DEFINITION INFORMATION INPUTTER 23

BASIC WORK SCHEDULE DEFINITION INFORMATION STORAGE 50
· BASIC WORK SCHEDULE INTERVAL INFORMATION
· THE NUMBER OF BASIC WORK SCHEDULES FOR EACH WORK SCHEDULE TYPE
· BASIC WORK SCHEDULE TIME LENGTH CONSTRAINT

EVALUATION CONDITION INPUTTER 24

EVALUATION CONDITION INFORMATION STORAGE 60
· REST TIME CONDITION
· CONNECTION CONDITION
· CONDITION ON THE NUMBER OF TIMES OF VEHICLE TRANSFERRING

WORK SCHEDULE PLAN CREATOR10
TASK FRAGMENT CREATOR 11
MATHEMATICAL MODEL CREATOR 16
TASK FRAGMENT INFORMATION STORAGE 17

TASK FRAGMENT INFORMATION STORAGE 71

WORK SCHEDULE PLAN STORAGE 72

OUTPUTTER 80

FIG. 3

PLAN BASIC INFORMATION 30

| WORK SCHEDULE TYPE | EARLY-MORNING | DAY-TASK | OVERNIGHT |
|---|---|---|---|
| THE NUMBER OF WORK SCHEDULES | 3 | 2 | 3 |
| TIME SLOT | 4:00 ～13:00 | 7:00 ～19:00 | 12:00 ～26:00 |
| DUTY TIME TARGET VALUE | FIVE HOURS | SEVEN HOURS AND THIRTY MINUTES | EIGHT HOURS |

| TURNING STATION | STATIONS A AND B |
|---|---|
| REPLACING POSSIBLE STATION | STATION C |

FIG. 4

TIMETABLE INFORMATION 40

UPBOUND

| DEPARTURE FROM B | ARRIVAL AT C | DEPARTURE FROM C | STATION A |
|---|---|---|---|
| 5:57 | 6:23 | 6:24 | 6:34 |
| | | | |
| 7:08 | 7:35 | 7:36 | 7:46 |
| | | | |
| 7:26 | 7:53 | 7:54 | 8:04 |
| | | | |
| ・・・ | ・・・ | ・・・ | ・・・ |

DOWNBOUND

| DEPARTURE FROM A | ARRIVAL AT C | DEPARTURE FROM C | ARRIVAL AT B |
|---|---|---|---|
| — | — | 5:21 | 5:48 |
| | | | |
| 6:17 | 6:27 | 6:28 | 6:54 |
| | | | |
| 6:37 | 6:47 | 6:48 | 7:15 |
| | | | |
| 7:54 | 8:04 | 8:05 | 8:34 |
| | | | |
| ・・・ | ・・・ | ・・・ | ・・・ |

FIG. 5

BASIC WORK SCHEDULE DEFINITION INFORMATION 50

| | STATION A (TURNING STATION) | STATION C (REPLACING POSSIBLE STATION) | STATION B (TURNING STATION) |
|---|---|---|---|
| BASIC WORK SCHEDULE INTERVAL | 10 MINUTES OR LONGER | 10 MINUTES OR LONGER (FORWARD) 15 MINUTES OR LONGER (BACKWARD) | 15 MINUTES OR LONGER |

TASK CONNECTION INFORMATION

## FIG. 6A

| WORK SCHEDULE TYPE | EARLY-MORNING | DAY-TASK | OVERNIGHT |
|---|---|---|---|
| ·THE NUMBER OF BASIC WORK SCHEDULES | 2 | 3~5 | 3~5 |
| ·UPPER LIMIT CONSTRAINT OF BASIC WORK SCHEDULE LENGTH | ·ALWAYS THREE HOURS OR SHORTER | ·ALWAYS THREE HOURS OR SHORTER | ·ALWAYS THREE HOURS OR SHORTER |
| ·LOWER LIMIT CONSTRAINT OF BASIC WORK SCHEDULE LENGTH | ·TWO HOURS AND THIRTY MINUTES OR LONGER FOR FIRST BASIC WORK SCHEDULE IF POSSIBLE | | ·TWO HOURS OR LONGER FOR LAST BASIC WORK SCHEDULE IF POSSIBLE |

BASIC WORK SCHEDULE TIME LENGTH CONSTRAINT

## FIG. 6B

EVALUATION CONDITION INFORMATION 60

REST TIME CONDITIONS (SUCH AS MAXIMUM AND MINIMUM VALUES)
- · 90 MINUTES OR SHORTER PER REST
- · TOTAL REST TIME PER WORK SCHEDULE IS THREE HOURS OR SHORTER
- · EACH WORK SCHEDULE INCLUDES AT LEAST ONE MEAL REST TIME OF
  STAFF IN MEAL REST TIME SLOT.  MEAL REST IS 30 MINUTES OR LONGER
  OR IS 60 MINUTES OR LONGER IF POSSIBLE.  MEAL REST TIME SLOT IS
  7:00 TO 10:00 FOR EARLY-MORNING, 11:00 TO 14:00 FOR DAY-TASK,
  AND 18:00 TO 21:00 FOR OVERNIGHT.

TASK CONNECTION CONDITIONS
- · TASK a IS ALWAYS FOLLOWED BY TASK b
- · TASK c IS ALWAYS ALLOCATED TO "EARLY-MORNING" WORK SCHEDULE
- · TASK d IS LAST IN BASIC WORK SCHEDULE
- · TASK e IS FIRST IN BASIC WORK SCHEDULE
- · AT REPLACING STATION, 15 MINUTES OR LONGER IS PROVIDED FOR
  CONNECTION TO TASK IN OPPOSITE DIRECTION
- · AT TURNING STATION, 5 MINUTES OR LONGER IS PROVIDED FOR
  CONNECTION TO NEXT TASK
- · IN CASE WHERE DEPOT INBOUND WORK IS PERFORMED, 60 MINUTES
  OR LONGER IS PROVIDED FOR CONNECTION TO NEXT TASK
- · IN CASE WHERE DEPOT OUTBOUND WORK IS PERFORMED, 60 MINUTES
  OR LONGER IS PROVIDED FOR CONNECTION FROM PREVIOUS TASK

CONDITIONS ON THE NUMBER OF TIMES OF VEHICLE TRANSFERRING OF STAFF
- · THE NUMBER OF TIMES OF VEHICLE TRANSFERRING IN WORK SCHEDULE
  IS ONE OR LESS
- · AT TURNING STATION B, STAFF SWITCHES TASK TO NOT TRAIN THAT
  DEPARTS RIGHT AFTER ARRIVAL TIME BUT TO TRAIN THAT DEPARTS
  SECOND

# FIG. 7

TASK FRAGMENT INFORMATION 71

| TASK ID | DEPARTURE TIME | DEPARTURE STATION | ARRIVAL TIME | ARRIVAL STATION | DIRECTION |
|---|---|---|---|---|---|
| 1 | 5:57 | B | 6:23 | C | UPBOUND |
| 2 | 6:24 | C | 6:34 | A | UPBOUND |
| 3 | 7:08 | B | 7:35 | C | UPBOUND |
| 4 | 7:36 | C | 7:46 | A | UPBOUND |
| 5 | 7:26 | B | 7:53 | C | UPBOUND |
| 6 | 7:54 | C | 8:04 | A | UPBOUND |
| | ... | ... | ... | ... | |
| 101 | 5:21 | C | 5:48 | B | DOWNBOUND |
| 102 | 6:17 | A | 6:27 | C | DOWNBOUND |
| 103 | 6:27 | C | 6:54 | B | DOWNBOUND |
| 104 | 6:37 | A | 6:47 | C | DOWNBOUND |
| 105 | 6:48 | C | 7:15 | B | DOWNBOUND |
| 106 | 7:54 | A | 8:04 | C | DOWNBOUND |
| 107 | 8:05 | C | 8:34 | B | DOWNBOUND |
| | ... | ... | ... | ... | ... |

# FIG. 8

WORK SCHEDULE PLAN 72

| WORK SCHEDULE | BASIC WORK SCHEDULE | TASK ID | DEPARTURE TIME | DEPARTURE STATION | ARRIVAL TIME | ARRIVAL STATION |
|---|---|---|---|---|---|---|
| ake 1 | 1 | 101 | 5:21 | C | 5:48 | B |
| | | 1 | 5:57 | B | 6:23 | C |
| | | ... | ... | ... | ... | ... |
| | | 5 | 7:26 | B | 7:53 | C |
| | 2 | 112 | 9:29 | C | 9:58 | B |
| | | 18 | 10:08 | B | 10:36 | C |
| | | ... | ... | ... | ... | ... |
| | | 121 | 10:57 | A | 11:07 | C |
| ake 2 | 1 | 102 | 6:17 | A | 6:27 | C |
| | | 103 | 6:27 | C | 6:54 | B |
| | | ... | ... | ... | ... | ... |
| | | 107 | 8:05 | C | 8:34 | B |
| | 2 | 13 | 9:33 | B | 9:59 | C |
| | | 14 | 10:00 | C | 10:10 | A |
| | | ... | ... | ... | ... | ... |
| | | 125 | 11:51 | A | 12:01 | C |
| ... | ... | ... | ... | ... | ... | ... |

FIG. 9

FIG. 10

100A

EP 4 523 993 A1

START

Step 1:CREATE TASK FRAGMENT INFORMATION

Step 2:p ← INITIAL SOLUTION p GENERATED BY
INITIAL SOLUTION GENERATOR

REPEAT FOR PREDETERMINED NUMBER OF TIMES

Step 3:GENERATE IMPROVED SOLUTION p BY PLAN
IMPROVER AND PLAN EVALUATOR

Step 4:IS END
CONDITION SATISFIED?

YES

NO

OUTPUT SOLUTION p AND END

FIG. 11

START NODE

| | | | | |
|---|---|---|---|---|
| WORK SCHEDULE h1 | 1 | 4<br>A → C | 7<br>C → A | 11 ×<br>A → C | × |
| WORK SCHEDULE h2 | 2 | 5<br>C → B | 8<br>B → C | | O |
| WORK SCHEDULE h3 | 3 | 6 ×<br>C → B | 9<br>B → C | 10<br>C → A | × |

$t_1$        $t_2$

| TASK ID |
|---|
| A → B |

A: START PLACE
B: END PLACE
t1: START TIME
t2: END TIME

FIG. 12

WORK SCHEDULE h2

| 2 | 5 B→C | 8 C→A |
|---|---|---|

WORK SCHEDULE h3

| 3 | 6 B→C | 9 C→B | 10 B→C |
|---|---|---|---|

EXECUTE EXCHANGE CALCULATION

WORK SCHEDULE h2

| 2 | 5 B→C | 9 C→B | 10 B→C |
|---|---|---|---|

WORK SCHEDULE h3

| 3 | 6 B→C | 8 C→A |
|---|---|---|

FIG. 13

START Backtrack (K, h1)

Step 3-1 A ← CURRENT PLAN (CONSTRAINT VIOLATION NUMBER f(A))

REPEAT PATH GENERATION (LIST PATH p ALONG WHICH THE NUMBER OF TIMES OF EXCHANGE IS K OR LESS WITH STARTING POINT AT WORK SCHEDULE h1)

Step 3-2 $X_1, X_2, \cdots, X_k$ ← EXCHANGE SEQUENCE CORRESPONDING TO PATH p
$A' \leftarrow X_k \cdot X_{k-1} \cdots X_1 \cdot A$

Step 3-3: f(A')<f(A)?

YES

NO

THE NUMBER OF TIMES OF EXCHANGE < k'?

YES

NO

Step 3-4 EXECUTE A' ← Backtrack(K-k', h') WITH STARTING POINT AT ANOTHER WORK SCHEDULE h' TO WHICH CONSTRAINT VIOLATION HAS OCCURRED IN PROCESS OF A → A'

Step 3-5: f(A')<f(A)?

YES

NO

END

OUTPUT A' AND END

FIG. 14

PLAN BEFORE EXCHANGE EXECUTION

P: CHANGED PATH

START NODE

| | | |
|---|---|---|
| WORK SCHEDULE h1 | 1 | |
| WORK SCHEDULE h2 | 2 | |
| WORK SCHEDULE h3 | 3 | |

4  A → C          7  C → A                    11  A → C          ×

5  C → B          8  B → C                                      ○

6  C → B          9  B → C          10  C → A                   ×

EXECUTE EXCHANGE BASED ON CHANGED PATH P

# FIG. 15A

PLAN AFTER EXCHANGE EXECUTION

START NODE

| | | |
|---|---|---|
| WORK SCHEDULE h1 | 1 | |
| WORK SCHEDULE h2 | 2 | |
| WORK SCHEDULE h3 | 3 | |

4  A → C     6  C → B     8  B → C                              ○

5  C → B          9  B → C          10  C → A                   ○

7  C → A                    11  A → C                           ○

TIME SLOT CONDITION
TASKS 4 TO 8 ARE ALLOTTABLE TO WORK SCHEDULE h1
TASKS 5 TO 10 ARE ALLOTTABLE TO WORK SCHEDULE h2
TASKS 7 TO 11 ARE ALLOTTABLE TO WORK SCHEDULE h3

# FIG. 15B

EP 4 523 993 A1

**EXAMPLE 1:**

TASK ☐ ☐ ☐ ☐ ☐ ☐ ☐ ☐

BASIC WORK SCHEDULE | FIRST BASIC WORK SCHEDULE | × THE NUMBER OF BASIC WORK SCHEDULES 1

× FIVE HOURS

## FIG. 16A

MEAL TIME SLOT 7:00～10:00

**EXAMPLE 2:**

TASK ☐ ☐ ☐ ☐ ☐ ☐ ☐ ☐ ☐

BASIC WORK SCHEDULE | FIRST BASIC WORK SCHEDULE | REST TIME | SECOND BASIC WORK SCHEDULE | REST TIME | THIRD BASIC WORK SCHEDULE |

THIRTY MINUTES × TWENTY MINUTES

× EIGHT HOURS

## FIG. 16B

**EXAMPLE 3:**

TASK ☐ ☐ ☐ ☐ ☐ ☐ ☐

BASIC WORK SCHEDULE | FIRST BASIC WORK SCHEDULE | REST TIME | SECOND BASIC WORK SCHEDULE |

TWO HOURS AND TEN MINUTES | FORTY MINUTES | ONE HOUR AND FORTY MINUTES

## FIG. 16C

FOUR HOURS AND THIRTY MINUTES

FIG. 17

EP 4 523 993 A1

EXAMPLE:
· 2:32 PLANNED FOR UPPER LIMIT VALUE OF 3:00 → OK
· FIRST OPERATION: 2:32 PLANNED FOR TARGET OF 2:45
        SHORTFALL OF 13 MINUTES
        (PENALTY OF 13 POINTS)
...

96

EXAMPLE:
MEAL REST TIME SLOT: 7:00 to 10:00
· MINIMUM TIME CONDITION (30 MINUTES OR LONGER) → OK
· 36 MINUTES PLANNED FOR TARGET TIME OF 60 MINUTES → OK (SHORTFALL OF 24 MINUTES, PENALTY OF 576 POINTS)
...

95

| | WORK SCHEDULE1 | | |
|---|---|---|---|
| | STATION A | STATION C | STATION B |
| BASIC WORK SCHEDULE 1 (TWO HOURS AND THIRTY-TWO MINUTES, 204.8 KILOMETERS) | 5:21 | | 5:48 / 5:57 |
| | | | 7:53 |
| REST1 | REST FOR THIRTY-SIX MINUTES | | |
| BASIC WORK SCHEDULE 2 (ONE HOUR AND THIRTY-EIGHT MINUTES, 118.6 KILOMETERS) | 8:29 | | 8:58 / 9:08 |
| | | | 10:07 |

FIG. 18

EP 4 523 993 A1

CASE WHERE FIRST TASK IS TASK WITH DEPOT OUTBOUND WORK FROM DEPOT AND LAST TASK IS TASK WITH DEPOT INBOUND WORK TO DEPOT

OUTBOUND WORK FROM DEPOT

TASK 1
C → A

TASK101
A → C

TASK 108
C → B

TASK12
B → C

INBOUND WORK TO DEPOT

5 MINUTES  5 MINUTES  15 MINUTES

| PREPARATION | WALK | SHUNTING | FIRST BASIC WORK SCHEDULE | REST TIME | SECOND BASIC WORK SCHEDULE | SHUNTING | WALK | ORGANIZATION |

15 MINUTES  5 MINUTES  5 MINUTES

DUTY TIME OF FIRST BASIC WORK SCHEDULE

DUTY TIME OF SECOND BASIC WORK SCHEDULE

DUTY TIME OF WORK SCHEDULE

## FIG. 19A

CASE WHERE DEPOT INBOUND WORK EXISTS BETWEEN BASIC WORK SCHEDULES

TASK 10
C → A

TASK 111
A → C

INBOUND WORK TO DEPOT

TASK 118
C → B

TASK 22
B → C

5 MINUTES  10 MINUTES

| PREPARATION | WALK | FIRST BASIC WORK SCHEDULE | SHUNTING | WALK | REST TIME | LAST BASIC WORK SCHEDULE | WALK | ORGANIZATION |

15 MINUTES  15 MINUTES

10 MINUTES  5 MINUTES

DUTY TIME OF FIRST BASIC WORK SCHEDULE

DUTY TIME OF SECOND BASIC WORK SCHEDULE

DUTY TIME OF WORK SCHEDULE

## FIG. 19B

EP 4 523 993 A1

CASE WHERE DEPOT OUTBOUND WORK EXISTS BETWEEN BASIC WORK SCHEDULES

| TASK 20 | | TASK121 | | | OUTBOUND WORK | TASK128 | | TASK32 | |
| C → A | | A → C | | | FROM DEPOT | C → B | | B → C | |

5 MINUTES  10 MINUTES                    15 MINUTES    15 MINUTES                         10 MINUTES  5 MINUTES

| PREPARATION | WALK | FIRST BASIC WORK SCHEDULE | REST TIME | WALK | SHUNTING | LAST BASIC WORK SCHEDULE | WALK | ORGANIZATION |

DUTY TIME OF FIRST BASIC WORK SCHEDULE          DUTY TIME OF SECOND BASIC WORK SCHEDULE

DUTY TIME OF WORK SCHEDULE

## FIG. 20A

CASE WHERE DEPOT INBOUND WORK AND OUTBOUND WORK EXIST BETWEEN BASIC WORK SCHEDULES

| TASK 30 | | TASK131 | INBOUND WORK | OUTBOUND WORK | TASK 138 | | TASK42 | |
| C → A | | A → C | TO DEPOT | FROM DEPOT | C → B | | B → C | |

5 MINUTES  10 MINUTES                              15 MINUTES              15 MINUTES                     10 MINUTES  5 MINUTES

| PREPARATION | WALK | FIRST BASIC WORK SCHEDULE | SHUNTING | REST TIME | SHUNTING | LAST BASIC WORK SCHEDULE | WALK | ORGANIZATION |

DUTY TIME OF FIRST BASIC WORK SCHEDULE          DUTY TIME OF SECOND BASIC WORK SCHEDULE

DUTY TIME OF WORK SCHEDULE

## FIG. 20B

EP 4 523 993 A1

METHOD OF PROVIDING INPUTS AS DEPOT INFORMATION

| TIME ITEMS | REQUIRED TIME |
|---|---|
| PREPARATION TIME (ATTENDANCE) | 5 MINUTES |
| ORGANIZATION TIME (LEAVING) | 5 MINUTES |
| SHUNTING WORK TIME (DEPOT OUTBOUND WORK) | 15 MINUTES |
| SHUNTING WORK TIME (DEPOT INBOUND WORK) | 15 MINUTES |
| WALK TIME (BETWEEN DEPOT AND STATION C) | 10 MINUTES |
| WALK TIME (BETWEEN DEPOT AND LINE) | 5 MINUTES |

## FIG. 21A

METHOD OF PROVIDING INPUTS AS ADDITIONAL INFORMATION OF TASK FRAGMENT

| TASK ID | DEPARTURE TIME | DEPARTURE STATION | ARRIVAL TIME | ARRIVAL STATION | DIRECTION | EX-ANTE ADDED TIME IN A CASE OF THE FIRST BASIC WORK SCHEDULE | EX-ANTE ADDED TIME IN A CASE OTHER THAN THE FIRST BASIC WORK SCHEDULE | EX-POST ADDED TIME IN A CASE OF THE LAST BASIC WORK SCHEDULE | EX-POST ADDED TIME IN A CASE OTHER THAN THE LAST BASIC WORK SCHEDULE |
|---|---|---|---|---|---|---|---|---|---|
| 1 | 5:57 | B | 6:23 | C | UPBOUND | 15 MINUTES | 30 MINUTES | 15 MINUTES | 0 MINUTES |
| 2 | 6:24 | C | 6:34 | A | UPBOUND | 25 MINUTES | 30 MINUTES | 15 MINUTES | 0 MINUTES |
| 3 | 7:08 | B | 7:35 | C | UPBOUND | 15 MINUTES | 0 MINUTES | 15 MINUTES | 30 MINUTES |
| 4 | 7:36 | C | 7:46 | A | UPBOUND | 15 MINUTES | 0 MINUTES | 15 MINUTES | 0 MINUTES |
| ... | ... | ... | ... | ... | ... | ... | ... | ... | ... |

## FIG. 21B

EXEMPLARY EXPRESSION IN GANTT CHART OF WORK SCHEDULE WITH PREPARATION TIME

FIG. 22A

EXPRESSION IN BOX TIMETABLE OF WORK SCHEDULE

| | WORK SCHEDULE 1 | | |
|---|---|---|---|
| | STATION A | STATION C | STATION B |
| BASIC WORK SCHEDULE 1 (2 HOURS AND 32 MINUTES + PREPARATION TIME OF 55 MINUTES; 204.8 KILOMETERS) | PREPARATION/WALK/ SHUNTING TIME ■4:56 ■5:21 SHUNTING/ WALK TIME ■7:53 8:23 | | 5:48 5:57 |
| REST 1 | | | |
| BASIC WORK SCHEDULE 2 (1 HOUR AND 38 MINUTES + ORGANIZATION TIME OF 15 MINUTES; 118.6 KILOMETERS) | WALK/ ORGANIZATION TIME ■11:07 ■11:22 | 8:59 | 9:28 9:38 |

FIG. 22B

1000

| 1001 | 1006 | 1004 |
|------|------|------|

| CPU | | COMMUNICATION DEVICE |

1002 1005

| INPUT DEVICE | | STORAGE DEVICE |

1003

| DISPLAY DEVICE |

FIG. 23

Europäisches
Patentamt

European
Patent Office

Office européen
des brevets

# EUROPEAN SEARCH REPORT

Application Number

EP 24 17 6758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/254405 A1 (HOLLIS BENJAMIN LESLIE [AU]) 8 October 2009 (2009-10-08) <br> * paragraph [0036]; figure 1 * <br> * paragraph [0045]; figure 2 * <br> * paragraph [0058] * <br> * paragraphs [0059] - [0064], [0070]; figure 3 * <br> * paragraph [0075]; figure 4 * <br> * paragraphs [0079] - [0081]; figures 5a, 5b * | 1-27 | INV. <br> B61L27/18 <br> G06Q10/0631 |
| A | US 2017/357929 A1 (SHUBS JR ALEXANDER [US] ET AL) 14 December 2017 (2017-12-14) <br> * paragraphs [0014], [0028]; figure 1 * <br> * paragraphs [0030], [0031]; figure 2 * | 1-27 | |
| A | US 2014/330605 A1 (CONNOLLY PAUL [US] ET AL) 6 November 2014 (2014-11-06) <br> * paragraph [0078]; figures 6,7 * | 1-27 | |

TECHNICAL FIELDS
SEARCHED       (IPC)

B61L
G06Q

The present search report has been drawn up for all claims

| Place of search | Date of completion of the search | Examiner |
|---|---|---|
| Munich | 29 October 2024 | Martínez Martínez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6758

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2024

| Patent document cited in search report | | Publication date | Patent family member(s) | | Publication date |
|---|---|---|---|---|---|
| US 2009254405 | A1 | 08-10-2009 | AU 2009201047 | A1 | 22-10-2009 |
| | | | EP 2109072 | A1 | 14-10-2009 |
| | | | US 2009254405 | A1 | 08-10-2009 |
| US 2017357929 | A1 | 14-12-2017 | NONE | | |
| US 2014330605 | A1 | 06-11-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5075577 B